# EUROPEAN PATENT APPLICATION

(11) **EP 4 238 812 A1**
(43) Date of publication of application: **06.09.2023**
(21) Application number: 23160042.0
(22) Date of filing: 03.03.2023
(51) Int. Cl.: B60L 53/16, B60L 53/31

(54) **SYSTEMS AND METHODS FOR CHARGING A MATERIAL HANDLING VEHICLE**

(30) Priority: 03.03.2022 US 202263316346 P; 03.03.2022 US 202263316352 P
(71) Applicant: The Raymond Corporation, Greene, New York 13778 (US)
(72) Inventor: BARTELS, Alan, Wilton, IA 52778 (US); STAMER, Alexander, Bettendorf, IA 53722 (US); KING, David, Rock Island, IL 62201 (US); WEAVER, Matthew, Davenport, IA 52806 (US)
(74) Representative: Zacco Sweden AB

(57) **Abstract**

A charging system for a material handling vehicle includes a charger plate assembly that is pivotally moveably coupled to a distal end of the mounting assembly arm. The charger plate assembly includes a first electrical contact that is configured to electrically couple with a second electrical contact of a charging port of the material handling vehicle. The charger plate assembly is configured to move relative to the mounting assembly arm when the first electrical contact electrically couples with the second electrical contact, which causes a scrubbing action between the first electrical contact and the second electrical contacts, thereby passively cleaning the contacts.

## Description

### CROSS-REFERENCE TO RELATED APPLICATIONS

This application claims the benefit of U.S. Provisional Patent Application No. 63/316,346, filed March 3, 2022, and U.S. Provisional Patent Application No. 63/316,352, filed March 3, 2022, each of which is incorporated herein by reference in its entirety.

### STATEMENT REGARDING FEDERALLY SPONSORED RESEARCH

Not applicable.

### BACKGROUND

Some material handling vehicles are powered by fuels (e.g., gasoline, propane, etc.), while others are powered by rechargeable batteries. Those that are powered by rechargeable batteries can be recharged by electrically connecting the rechargeable batteries to a power source.

### BRIEF SUMMARY

In some aspects, the present disclosure can provide a charging system for a material handling vehicle. The charging system can include a mounting assembly arm and a charger plate assembly moveably coupled to a distal end of the mounting assembly arm. The charger plate assembly can include a first charger plate electrical contact that can be configured to electrically couple with a second vehicle electrical contact of a charging port of the material handling vehicle. When the first charger plate electrical contact electrically couples with the second vehicle electrical contact, the charger plate assembly can be configured to move relative to the mounting assembly arm to cause a scrubbing action between the first charger plate electrical contact and the second vehicle electrical contact. The scrubbing action can result in passive cleaning of the first charger plate electrical contact and the second vehicle electrical contact.

In some non-limiting examples, the charger plate assembly can be pivotally coupled to distal end of the mounting assembly arm. Contact between the first charger plate electrical contact and the second vehicle electrical contact can cause the charger plate assembly to pivot from a first rotational position to a second rotational position to cause the scrubbing action between the first charger plate electrical contact and the second vehicle electrical contact. In some cases, the charging system can further include a biasing element that can be configured to bias the charger plate assembly to the first rotational position. For example, a biasing element can be positioned between the mounting assembly arm and the charger plate assembly.

In some non-limiting examples, the mounting assembly arm can be configured to move along a first direction to change a distance between the charger plate assembly and the charging port of the material handling vehicle. The mounting assembly can be moveably supported on a base. For example, a pair of guide rails can be supported on the base and the mounting assembly arm can be coupled to the guide rails by a plurality of wheels arranged within the guide rails. A first actuator can be coupled between the base and the mounting assembly arm, which can be configured to extend and retract to change the distance between the charger plate assembly and the charging port of the material handling vehicle.

In some non-limiting examples, the charging system can further include a second actuator coupled between the charger plate assembly and the mounting assembly arm. The second actuator can be configured to selectively adjust a position of the charger plate assembly along a second direction that can be different from the first direction.

In some non-limiting examples, the charging system can further include a first sensor that can be coupled to the charger plate assembly. The first sensor can be configured to sense a distance between the charger plate assembly and a charging port of a material handling vehicle. In some cases, a second sensor coupled to the charger plate assembly. The second sensor can be configured to detect a target arranged on a material handling vehicle.

In some non-limiting examples, the first charger plate electrical contact and the second vehicle electrical contact can be configured for at least one of: transferring electrical power for charging a battery of the material handling vehicle and transmitting electrical communications between the material handling vehicle and the charging system. In some cases, at least one of the first charger plate electrical contact and the second vehicle electrical contact can be configured as a spring-biased contact.

In some aspects, the present disclosure can provide a charging system for a material handling vehicle including a battery and a charging port having a first vehicle electrical contact electrically coupled to the battery. The charging system can include a mounting assembly arm and a charger plate assembly pivotally coupled to the mounting assembly arm. The charger plate assembly can rotate relative to the mounting assembly arm to move between a first orientation and a second orientation and can include a second charger plate electrical contact electrically coupled to a power source. The second charger plate electrical contact can be configured to couple to the first vehicle electrical contact of the material handling vehicle for charging.

In some non-limiting examples, with the charger plate assembly in the first orientation, a head plane defined by the charger plate assembly can be angled relative to a mounting plane defined by the mounting assembly arm. In the second orientation, the head plane can be parallel to the mounting plane. In some cases, a biasing element can be positioned between the charger plate assembly and the mounting assembly arm to bias the charger plate assembly to the first orientation.

In some non-limiting examples, as the charging port is brought into contact with the charger plate assembly, the second charger plate electrical contact of the charger plate assembly can slide across the first vehicle electrical contact of the charging port to cause sliding frictional contact therebetween. The sliding frictional contact can passively clean each of the second charger plate electrical contact and the first vehicle electrical contact. In some cases, at least one of the first vehicle electrical contact and the second charger plate electrical contact can be configured as a plurality of electrical contacts.

In some aspects, the present disclosure can provide a method of charging a material handling vehicle that includes a battery and a charging port having a first vehicle electrical contact electrically coupled to the battery. According to the method, a mounting assembly can be moved toward the material handling vehicle to engage a charger plate assembly with the charging port. The charger plate assembly can have a second charger plate electrical contact configured to electrically couple to the first vehicle electrical contact. The charger plate assembly can be moved relative to the mounting assembly arm and the second charger plate electrical contact can be slide across the first vehicle electrical contact to cause sliding frictional contact therebetween.

In some non-limiting examples, engaging the charging port with the charger plate assembly can cause pivoting movement of the charger plate assembly about the mounting assembly arm. The pivoting movement of the charger plate assembly about the mounting assembly arm can cause the sliding between the first vehicle electrical contact and the second charger plate electrical contact. The resultant sliding frictional contact between the first vehicle electrical contact and the second charger plate electrical contact can be configured remove contaminants from each of the first vehicle electrical contact and the second charger plate electrical contact.

In some non-limiting examples, the method can further include determining that a charge of the battery can be below a threshold. Upon determining that the charge of the battery is below the threshold, the material handling vehicle can be navigated toward the charger plate assembly.

In some aspects, the present disclosure can provide a charging system for a material handling vehicle. The charging system can include a base, a mounting assembly arm moveably coupled to the base, and a charger plate assembly moveably coupled to a distal end of the mounting assembly arm. A first actuator can be coupled between the base and the mounting assembly arm. The first actuator can be configured to selectively translate the mounting assembly arm along a first direction. A second actuator coupled between the charger plate assembly and the mounting assembly arm. The second actuator can be configured to selectively translate the charger plate assembly along a second direction that can be different from the first direction.

In some non-limiting examples, a guide rail can be supported on the base and the mounting assembly arm can be coupled to the guide rail by a plurality of wheels arranged to couple with the guide rail. The charger plate assembly can be pivotally coupled to a distal end of the mounting assembly arm to move from a first orientation to a second orientation. A distal end of the second actuator can include a rotational bearing configured to engage with the charger plate assembly. In some cases, the charger plate assembly can include a housing and a lifting plate coupled to the housing. The rotational bearing can be configured to engage with the lifting plate.

In some non-limiting examples, the first direction can correspond with a distance between a charging port of the material handling vehicle and the charger plate assembly. The second direction can be perpendicular to the first direction.

In some non-limiting examples, the charging system can further include a position controller configured to selectively operate the first actuator and the second actuator. For example, in some cases, the position controller can be configured to operate the first actuator to move the charger plate assembly a first distance along the first direction to be a predetermined distance away from a charging port of the material handling vehicle, to operate the second actuator to move the charger plate assembly a second distance along the second direction so that the charger plate assembly can be aligned with the charging port along the second direction, and to operate the first actuator to move the charger plate assembly a third distance along the first direction so that the charger plate assembly electrically couples to the charging port of the material handling vehicle for charging.

In some non-limiting examples, a first sensor can be coupled to the charger plate assembly and can be in communication with the position controller. The first sensor can be configured to sense a distance between the charger plate assembly and a charging port of the material handling vehicle along the first direction. A second sensor can be coupled to the charger plate assembly and can be in communication with the position controller. The second sensor can be configured to detect a target arranged on a material handling vehicle to align the charging plate assembly with a charging port of the material handling vehicle along the second direction. A third sensor and a fourth sensor can be in communication with position controller and can be configured to sense a position of the mounting assembly arm along the first direction.

In some non-limiting examples, the charging system can further include a charge controller in communication with the material handling vehicle. The charge controller can be configured to control a flow of current between the charger plate assembly and a charging port of the material handling vehicle.

In some aspects, the present disclosure can provide a charging system for a material handling vehicle having a charging port with a first vehicle electrical contact. The charging system can include a base, a mounting assembly arm moveably coupled to the base, and a charger plate assembly moveably coupled to a distal end of the mounting assembly arm. The charger plate assembly can include a second charger plate electrical contact configured to engage with the first vehicle electrical contact of the charging port. A first actuator can be coupled between the base and the mounting assembly arm. The first actuator can be configured to selectively translate the mounting assembly arm and the charger plate assembly relative to the base along a first direction. A second actuator can be coupled between the charger plate assembly and the mounting assembly arm. The second actuator can be configured to selectively translate the charger plate assembly relative to the mounting assembly arm along a second direction that can be different from the first direction. A position controller can be configured to selectively operate the first actuator and the second actuator to electrically couple the second charger plate electrical contact with the first vehicle electrical contact.

In some non-limiting examples, the first direction can correspond with a distance between the charging system and the material handling vehicle. The second direction can correspond with a height of the material handling vehicle.

In some non-limiting examples, the position controller can be configured to operate the first actuator to move the second charger plate electrical contact a first distance along the first direction to be at a predetermined distance away from the first vehicle electrical contact, in which the second charger plate electrical contact can be electrically decoupled from the first vehicle electrical contact; to operate the second actuator to move the second charger plate electrical contact a second distance along the second direction so that the second charger plate electrical contact can be aligned with the first vehicle electrical contact along the second direction; and to operate the first actuator to move the second charger plate electrical contact a third distance along the first direction so that the second charger plate electrical contact can be electrically coupled to the first vehicle electrical contact.

In some non-limiting examples, the charging system can further include a first sensor and a second sensor that can each be in communication with the position controller. The first sensor can be configured to sense a distance between the first vehicle electrical contact and the second charger plate electrical contact along the first direction. The second sensor can be configured to sense a distance between the first vehicle electrical contact and the second charger plate electrical contact along the second direction.

In some aspects, the present disclosure can provide a method of charging a material handling vehicle having a battery and a charging port electrically connected to the battery. According to the method, a charger plate assembly can be moved a first distance along a first direction to be at a predetermined distance from the charging port along the first direction. The charger plate assembly can be moved along a second direction to be aligned with the charging port. The second direction can be different from the first direction. The charger plate assembly can be moved a second distance along the first direction to electrically couple the charger plate assembly to the charging port.

In some non-limiting examples, the method can further include at least one of: determining that charger plate assembly can be at the predetermined distance with a first position sensor; and determining that the charger plate assembly can be aligned with the charging port with a second sensor.

In some non-limiting examples, moving the charger plate assembly along the second direction occurs when the charger plate assembly can be at the predetermined distance. In some cases, and/or moving the charger plate assembly the second distance along the first direction occurs when the charger plate assembly can be aligned with the charging port.

In some non-limiting examples, the method can further include charging the battery with the charger plate assembly electrically coupled to the charging port and moving the charger plate assembly away from the material handling vehicle to electrically decouple the charger plate assembly from the charging port. The charger plate assembly can be moved to a stored position where the charger plate assembly can be fully retracted.

In some non-limiting examples, the method can further include pivoting the charger plate assembly relative to a mounting assembly arm and sliding an electrical contact of the charger plate assembly over an electrical contact of the charging port.

The foregoing and other aspects and advantages of the disclosure will appear from the following description. In the description, reference is made to the accompanying drawings which form a part hereof, and in which there is shown by way of illustration a preferred configuration of the disclosure. Such configuration does not necessarily represent the full scope of the disclosure, however, and reference is made therefore to the claims and herein for interpreting the scope of the disclosure.

### BRIEF DESCRIPTION OF THE DRAWINGS

The invention will be better understood and features, aspects and advantages other than those set forth above will become apparent when consideration is given to the following detailed description thereof. Such detailed description makes reference to the following drawings.
FIG. 1 shows a schematic illustration of a material handling vehicle and a charging system.
FIG. 2 shows a front perspective view of a mounting assembly arm and a charger plate assembly of the charging system that is useable with the material handling vehicle of FIG. 1.
FIG. 3 shows an exploded view of the charger plate assembly of FIG. 2.
FIG. 4 shows a top view of the mounting assembly arm and the charger plate assembly of FIG. 2, with a housing of the charger plate assembly being transparent.
FIG. 5 is a flowchart of a process or method for charging a material handling vehicle using the charging system of FIGS. 1 and 2.
FIG. 6 is a top perspective view of a material handling vehicle and a charging system.
FIG. 7 is a partial side view of the material handling vehicle of FIG. 6 showing details of a charging port.
FIG. 8 is a front side view of the support plate of FIG. 7.
FIG. 9 is a top, front, left perspective view of a mounting assembly arm of the charging system of FIG. 6.
FIG. 10 is an exploded view of a mounting assembly arm and a charger plate assembly of FIG. 6.
FIG. 11 is a top, back, right perspective view of the charger plate assembly of FIG. 9.

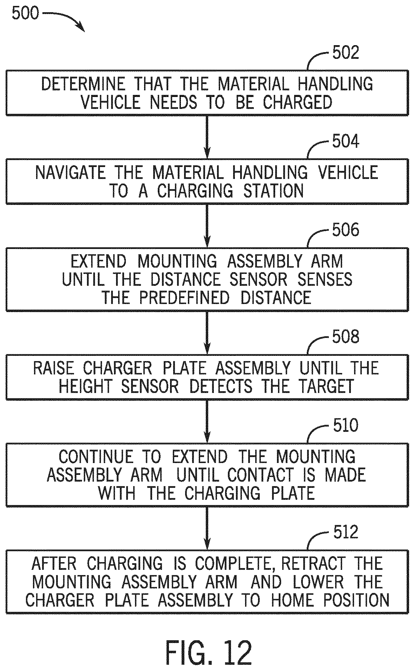

FIG. 12 is a flowchart of a process or method for charging a material handling vehicle using the charging system of FIGS. 6 and 9-11.
FIG. 13 is a top perspective view of the material handling vehicle and a charging system, with the charging system in a stored configuration.
FIG. 14 is a top perspective view of the material handling vehicle and the charging system of FIG. 13, with the charging system in an extended configuration.
FIG. 15 is a top, front, and side perspective view of the charging system of FIG. 13.
FIG. 16 is a front perspective view of the charging system of FIG. 13, showing a charging plate that is supported on a base plate.
FIG 17 is a schematic illustration of a method for operating the charging system.

### DETAILED DESCRIPTION

Before any aspects of the present disclosure are explained in detail, it is to be understood that the present disclosure is not limited in its application to the details of construction and the arrangement of components set forth in the following description or illustrated in the following drawings. The present disclosure is capable of other configurations and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings. Throughout the disclosure, the terms "about" and "approximately" refer to a range of values ± 5% of the numeric value that the term precedes.

The following discussion is presented to enable a person skilled in the art to make and use aspects of the present disclosure. Various modifications to the illustrated configurations will be readily apparent to those skilled in the art, and the generic principles herein can be applied to other configurations and applications without departing from aspects of the present disclosure. Thus, aspects of the present disclosure are not intended to be limited to configurations shown but are to be accorded the widest scope consistent with the principles and features disclosed herein. The following detailed description is to be read with reference to the figures, in which like elements in different figures have like reference numerals. The figures, which are not necessarily to scale, depict selected configurations and are not intended to limit the scope of the present disclosure. Skilled artisans will recognize the non-limiting examples provided herein have many useful alternatives and fall within the scope of the present disclosure.

It is also to be appreciated that material handling vehicles (MHVs) are designed in a variety of classes and configurations to perform a variety of tasks. It will be apparent to those of skill in the art that the present disclosure is not limited to any specific MHV, and can also be provided with various other types of MHV classes and configurations, including for example, lift trucks, forklift trucks, reach trucks, SWING REACH^{®} vehicles, turret trucks, side loader trucks, counterbalanced lift trucks, pallet stacker trucks, order pickers, transtackers, tow tractors, and man-up trucks, and can be commonly found in warehouses, factories, shipping yards, and, generally, wherever pallets, large packages, or loads of goods can be required to be transported from place to place. The various systems and methods disclosed herein are suitable for any of operator controlled, pedestrian controlled, remotely controlled, and autonomously controlled material handling vehicles. Further, the present disclosure is not limited to material handling vehicles applications. Rather, the present disclosure may be provided for other types of vehicles, such as automobiles, buses, trains, tractor-trailers, farm vehicles, factory vehicles, and the like.

Material handling vehicles that are electrically powered typically include a battery or a battery pack having a plurality of rechargeable batteries that power various functions of the material handling vehicle (e.g., driving, lifting forks, etc.). Operation of the material handling vehicle discharges the battery. Accordingly, to continue operation of the material handling vehicle, the rechargeable battery can be recharged periodically (e.g., after the end of a work shift or between uses of the material handling vehicle).

Some non-limiting examples of the disclosure provide systems and methods for charging material handling vehicles. For example, some non-limiting examples can provide a charging system that can include a mounting assembly arm and a charger plate assembly. In general, the mounting assembly arm and the charger plate assembly may be movable. For example, the mounting assembly arm may be configured to translate, e.g., via an actuator, toward and away from a stationary material handling vehicle. The charger plate assembly may be pivotally coupled to the mounting assembly arm and/or selectively movable in a vertical direction (e.g., perpendicular to a floor upon which the material handling vehicle engages). In some non-limiting examples, the charger plate assembly can be configured to rotate relative to the mounting assembly arm and can be biased with a biasing member, for example, a spring, toward a first orientation (e.g., a first rotational position), in which the charger plate assembly is angled relative to the mounting assembly arm.

The material handling vehicle can include a rechargeable battery (e.g., within a battery pack or housing) and a charging port to charge the battery. The charging port can be electrically connected to the rechargeable battery and can include a first electrical contact (e.g., first, second vehicle electrical contact) (e.g., a first plurality of contacts, such as, at least one positive contact and at least one negative contact). The charging station can include a second electrical contact (e.g., first, second charging plate electrical contact) (e.g., a second plurality of contacts, such as, at least one positive contact and at least one negative contact), which may correspond with the first electrical contact, and which can be electrically connected to a power source (e.g., a power outlet or other power main).

When the mounting assembly arm moves toward the stationary material handling vehicle, the charging head can be brought into contact (i.e., engage) with the charging port on the material handling vehicle. The engagement of and the resultant contact between the charging port and the charging head can cause the charging head to rotate or pivot from a first orientation (e.g., a first rotational position) to a second orientation (e.g., a second rotational position), which in turn can cause the second contact to slide along the first contact. The movement between the first contact and the second contact can result in a scrubbing or wiping action therebetween, which can clean the respective contacts and improve electrical contact therebetween. To help facilitate this sliding frictional contact during engagement of the charging head with the charging port and to account for variations in pressure and distance between the contacts during engagement, one or both of the first contact or the second contact can be configured as a spring biased contact.

For example, with the charger plate assembly translating toward the charging port on the material handling vehicle (e.g., from translation of the mounting assembly arm), the second contact of the charging head slides over (or in other words brushes) the first contact. In this way, for example, the sliding engagement between the contacts can brush away or otherwise clean off debris, corrosion, or other sources of contamination or fouling that may be present on the contacts, due to the conditions that may be present in the operating environment. Thus, the electrical contacts of the material handling vehicle and the electrical contacts of the charging head can be self-cleaning (e.g., can be passively cleaned in use).

In addition, the movability of the mounting assembly arm and the charger plate assembly (pivotally and in the horizontal and vertical translations) enables positional adjustment of the charger plate assembly to accommodate for various stationary positions of the material handling vehicle being charged. For example, a second actuator (e.g., a lift actuator) can be coupled between the mounting assembly arm and the charger plate assembly. Operation of the second actuator (e.g., extension and retraction) can move the charger plate assembly along a second direction (e.g., perpendicular to a first direction corresponding with movement of the mounting arm). The second direction can, for example, correspond with a height or lateral direction relative to the material handling vehicle.

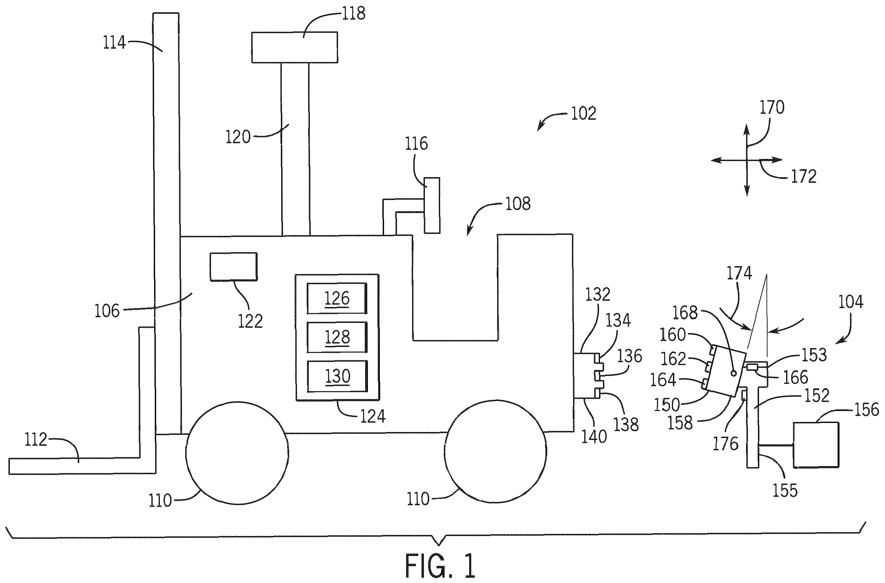

FIG. 1 shows a schematic illustration of a material handling vehicle 102 and a charging system 104. The charging system 104 can be configured to charge one or more batteries or battery packs 124 on the material handling vehicle 102. In the illustrated non-limiting example, the material handling vehicle 102 can be forklift that includes a vehicle body 106, an operator compartment 108, wheels 110 (e.g., tractive elements) operatively coupled to the vehicle body 106 to propel the material handling vehicle 102, an implement, for example, a pair of forks 112 configured to engage a load (e.g., a pallet), a mast 114 configured to raise and lower the forks 112 or other implement, and a steering system 116 (e.g., a control handle(s)) configured to control the movement of the material handling vehicle 102. In some examples, different material handling vehicle 102 can include or exclude the components listed above, for example, a material handling vehicle may not include a mast or forks.

In some non-limiting examples, the material handling vehicle 102 can operate as an automatic guided vehicle ("AVG"). Correspondingly, the material handling vehicle 102 can include a navigation unit 118 coupled to the vehicle body 106 of the material handling vehicle 102, which can allow the material handling vehicle 102 to be an AVG. The navigation unit 118 can allow interfacing between various components of a detection system, which can include obstacle sensors, other cameras, geographic positioning systems ("GPS"), motion sensors, etc. In some non-limiting examples, the navigation unit 118 can also be configured to communicate or otherwise interface (e.g., through another intermediate system of controller) with a warehouse management system. In this way, the navigation unit 118 can provide sensing, navigation capabilities, computational resources, etc., to automatically guide the material handling vehicle 102 in an operating environment. While the navigation unit 118 is illustrated in FIG. 1 as being coupled to the vehicle body 106 via a post 120, the navigation unit 118 can also be positioned relative to the vehicle body 106 in different ways. For example, in some non-limiting examples, the navigation unit 118 can be coupled to a surface of the vehicle body 106, can be positioned within the vehicle body 106, etc.

In some non-limiting examples, the material handling vehicle 102 can include a vehicle controller 122, which can be in communication with some or all of the components of the material handling vehicle 102, as may be included in some implementations. For example, the vehicle controller 122 can be in communication with the motors, actuators (e.g., an actuator that lifts and lowers the forks 112), sensors, display, user interfaces, communication systems, detection systems, etc., of the material handling vehicle 102. In addition, the vehicle controller 122 can be in communication with the navigation unit 118. In some non-limiting examples, the vehicle controller 122 can receive data from and transmit instructions to (e.g., cause a particular component to implement a task) each component that is in in communication with the vehicle controller 122, as well as other external systems, for example, a warehouse management system or other material handling vehicles. Furthermore, the vehicle controller 122 can also control a flow of electrical current to or from the battery pack 124 (e.g., for charging and discharging, including operation of one or more contactors). In some cases, the vehicle controller 122 can communicate with a battery management system, or another intermediary controller that ultimately controls charging and discharging.

In some non-limiting examples, the vehicle controller 122 can be implemented in different ways. For example, the vehicle controller 122 can include typical components used such as a processor, memory, a display, inputs (e.g., a keyboard, a mouse, a graphical user interface, a touch-screen display, etc.), communication devices, etc. In some non-limiting examples, the vehicle controller 122 can be implemented as a processor. The vehicle controller 122 can be configured to communicate with other computing devices and systems, for example, to control one or more functions and/or operations of the material handling vehicle 102. For example, the vehicle controller 122 can control both an acceleration and a direction of travel of the material handling vehicle 102 by controlling any associated components or subsystems, for example, a drive system, including any corresponding motors and actuators. Similarly, the vehicle controller can control the mast 114 to raise and lower the fork assembly 112. In some non-limiting examples, the vehicle controller 122 can implement some or all of the processes described below.

In some non-limiting examples, the material handling vehicle 102 can include a battery compartment coupled to or arranged within the vehicle body 106. The battery compartment can be configured to receive a battery pack 124 having one or more rechargeable batteries 126, 128, 130. While the battery pack 124 is described and illustrated as having three rechargeable batteries 126, 128, 130, the battery pack 124 can include more or fewer than three rechargeable batteries (e.g., one, two, four, five, etc.). The rechargeable batteries 126, 128, 130 can provide power to some or all of the components of the material handling vehicle 102. For example, the rechargeable batteries 126, 128, 130 can power a motor that drives the movement of the one or more of wheels 110, an actuator of the mast 114, the steering system 116, the navigation unit 118, the vehicle controller 122, other actuators, the detection system, sensors, etc. The rechargeable batteries 126, 128, 130 can be implemented in different ways. For example, each rechargeable battery 126, 128, 130 can be a lead acid battery, a lithium-ion battery, or another type of battery chemistry.

As generally mentioned above, rechargeable batteries can be periodically recharged to maintain operation of a material handling vehicle. Correspondingly, the material handling vehicle 102 can include a charging port 132 that can be in electrical communication with the rechargeable batteries 126, 128, 130. The charging port 132 can include a plurality of electrical contacts, which can include pairs of electrical contacts 134, 136, 138 that can each be electrically connected to some or all of the rechargeable batteries 126, 128, 130. In some non-limiting examples, the electrical contacts 134, 136, 138 may be connected to the rechargeable batteries 126, 128, 130 through a switch or contactor, which selectively controls when the electrical contacts 134, 136, 138 are electrically connected to the rechargeable batteries 126, 128, 130. Correspondingly, the vehicle controller 122 or another controller, for example a battery management system, can control the contactors to selectively electrically couple the electrical contacts 134, 136, 138 to the rechargeable batteries 126, 128, 130.

In some non-limiting examples, each pair of electrical contacts 134, 136, 138 can include a positive electrical contact and a negative electrical contact. Each positive electrical contact can be configured to be electrically coupled to a respective positive terminal on one or more of rechargeable battery 126, 128, 130, and each negative electrical contact can be configured to be electrically coupled to a respective negative terminal of on one or more of rechargeable battery 126, 128, 130.

For example, in some cases, each of the pair of electrical contacts 134 can be configured to be electrically connected to a respective positive or negative contact of the rechargeable battery 126, each of the pair of electrical contacts 136 can be configured to be electrically connected to a respective positive or negative contact of the rechargeable battery 128, and each of the pair of electrical contacts 138 can be configured to be electrically connected to a respective positive or negative contact of the rechargeable battery 130. Correspondingly, each pair of electrical contacts 134, 136, 138 can be electrically isolated from the other rechargeable batteries that are not electrically connected to the respective pair of electrical contacts. For example, the pair of electrical contacts 134 can be electrically isolated from the rechargeable batteries 128, 130, the pair of electrical contacts 136 can be electrically isolated from the rechargeable batteries 126, 130, and the pair of electrical contacts 138 can be electrically isolated from the rechargeable batteries 126, 128.

Alternatively, each pair of electrical contacts 134, 136, 138 can be electrically connected to each rechargeable battery 126, 128, 130. For example, in some cases, the rechargeable batteries 126, 128, 130 can be electrically connected in parallel and can share a common positive terminal and a common negative terminal. Accordingly, each positive electrical contact of each pair of electrical contacts 134, 136, 138 can be electrically connected to the common positive terminal (e.g., to be connected with a positive terminal of each rechargeable battery 126, 128, 130) and each negative electrical contact of each pair of electrical contacts 134, 136, 138 can be electrically connected to the common negative terminal (e.g., to be connected with a negative terminal of each rechargeable battery 126, 128, 130).

A charging port can be provided at one or more locations on a material handling vehicle. For example, in some non-limiting examples, the charging port 132 of the material handling vehicle 102 can be coupled to the rear end of the vehicle body 106. However, in some non-limiting examples, the charging port 132 can be positioned at other locations on the vehicle body 106, for example, on an outer surface or wall of the battery compartment or vehicle body 106.

In some configurations, the charging port 132 can include a plate 140 that can include a plurality of holes each configured to receive a respective electrical contact of the pairs of electrical contacts 134, 136, 138. Each of the pair of electrical contacts 134, 136, 138 may be an electrically-isolated plate that can be configured to interface with a corresponding contact on a charger plate assembly 150 of the charging system 104. In some non-limiting examples, to facilitate an electrical connection between the electrical contacts 134, 136, 138 and the contacts on the charger plate assembly 150, each electrical contact of the pairs of electrical contacts 134, 136, 138 can extend through a corresponding hole of the plate 140. In other configurations, each hole of the plate 140 can be configured to receive a respective electrical contact of the charger plate assembly 150. In the illustrated non-limiting example, each electrical contact of the pairs of electrical contacts 134, 136, 138 can be positioned behind the plate 140, with each electrical contact aligned with a respective hole of the plate 140.

In this way, the electrical contacts of the charger plate assembly 150 can either be inserted through the holes of the plate 140, or the electrical contacts of the charging port 132 can be inserted through a hole in a plate of the charging system 104. In some non-limiting examples, each pair of electrical contacts 134, 136, 138 can extend along the same plane (e.g., which can be parallel to a vertical axis 170). For example, in some non-limiting examples, such as when the electrical contacts 160, 162, 164 of the charger plate assembly 150 extend past the plate 158 (e.g., acting as protrusions), each hole of the plate 140 can be larger than each respective electrical contact of the charger plate assembly 150. In this way, each electrical contact of the charger plate assembly 150 can be inserted through a corresponding hole of the plate 140 and moved along the hole as the charger plate assembly 150 rotates. Similarly, such as when the electrical contacts of the charging port 132 extend through the plate 140 (e.g., acting as protrusions), each hole of the plate 158 can be larger than each respective electrical contact of the charger plate assembly 150. In this way, each electrical contact of the charging port 132 can be inserted through a corresponding hole of the plate 158 and moved along the hole as the charger plate assembly 150 rotates during engagement between the charging port 132 and the charger plate assembly.

With continued reference to FIG. 1, the charging system 104 can include the charger plate assembly 150, a mounting assembly arm 152, and a power source 156. The charger plate assembly 150 can include a plate 158, a plurality of electrical contacts that can include pairs of electrical contacts 160, 162, 164 (e.g., that correspond to the pairs of electrical contacts 134, 136, 138 on the charging port 132), and a biasing element 166. In some non-limiting examples, each electrical contact of the pairs of electrical contacts 160, 162, 164 can extend through the plate 158. For example, similar to the plate 140, the plate 158 can include holes, each of which can be configured to receive a corresponding electrical contact of the charger plate assembly 150, which can extend through a respective hole. In other configurations, the pairs of electrical contacts 160, 162, 164 can be structured in a similar manner as the electrical contacts of the charging port 132. For example, the pairs of electrical contacts 160, 162, 164 can be positioned behind the plate 158, with each electrical contact aligned with a hole of the plate 158 (e.g., to receive a corresponding electrical contact of the charging port 132).

In some non-limiting embodiments, a charger plate assembly can be configured to move (e.g., by pivoting or sliding motion) when engaging with a charging port. The relative movement between the contacts on the charger plate assembly and the charging port can result in sliding frictional contact that can clean the contacts and enhance the electrical connection therebetween. For example, as shown in FIG. 1, the charger plate assembly 150 can be pivotally coupled to the mounting assembly arm 152 at a pivot point 168, which can define a rotational axis for the charger plate assembly 150. In other words, the charger plate assembly 150 can rotate about the pivot point 168 in either a counterclockwise or clockwise direction. The pivot point 168 can include pins, fasteners, or other couplings configured to pivotally couple the charger plate assembly 150 to the mounting assembly arm 152 at the pivot point 168 (e.g., to move between a first rotational position and a second rotational position). In some non-limiting examples, the rotational axis defined through the pivot point 168 can extend into and out of the page with respect to the view in FIG. 1 (e.g., the rotational axis being perpendicular to a vertical axis 170, and a horizontal axis 172). In some non-limiting examples, the rotational axis defined through the pivot point 168 can extend parallel to the vertical axis 170.

The mounting assembly arm 152 can support the charger plate assembly 150 and can be implemented in various ways. For example, in the illustrated non-limiting example, the mounting assembly arm 152 can include an arm 153 that can be coupled to a base 155, which can be supported by the ground (e.g., that supports the material handling vehicle 102, such as a floor of a warehouse or building), or another support surface (e.g., a wall). In some non-limiting examples, a portion of the base 155 can extend in a direction that is substantially (e.g., deviating by less than 20%) or entirely parallel to the vertical axis 170 (e.g., which is perpendicular to the horizontal axis 172). In some non-limiting examples, the base 155 can be mounted to a track and coupled to an actuator to enable the base 155, and the mounting assembly arm 152 coupled thereto, to translate along the horizontal axis 172 (e.g., in a direction toward and away from the material handling vehicle 102 to move between a retracted position and an extended position).

In some non-limiting examples, the charger plate assembly 150 can be biased toward a (first) rotational position relative to the mounting assembly arm 152 (e.g., via the biasing element 166). For example, the charger plate assembly 150 can be biased (e.g., via the biasing element 166) toward the rotational position in which the charger plate assembly 150 is positioned at an angle 174 relative to an axis (e.g., the vertical axis 170 or the horizontal axis 172). In addition, such as the configuration illustrated in FIG. 1, the charger plate assembly 150 can be angled downwardly relative to an axis parallel to the horizontal axis 172 and can be angled relative to the vertical axis 170. In some non-limiting examples, the angle 174 can be in a range that is greater than about 0 degrees and less than or equal to about 10 degrees, while in other cases the angle 174 can be in a range that is greater than about 0 degrees and less or equal to than about 20 degrees. In some specific cases, the angle 174 can be about 6 degrees. As a result, with the charger plate assembly 150 in a biased rotational position, the charger plate assembly 150 can be at non-zero angle relative to the charging port 132 so that the pairs of electrical contacts 160, 162, 164 are angled relative to (e.g., not parallel to) the pairs of electrical contacts 134, 136, 138.

The biasing element 166 can be configured to mechanically bias the charger plate assembly 150 toward the rotational position. Thus, the biasing element 166 can be implemented in different ways. For example, the biasing element 166 can be a spring (e.g., a compression spring, an extensions spring, a torsional spring, or another type of resilient member, such as a rubber bumper), a magnet (e.g., a pair of magnets), a piston (e.g., a fluid loaded piston, a pneumatic piston, or equivalents), etc.

With continued reference to FIG. 1, the power source 156 can be electrically connected to each electrical contact of each pair of electrical contacts 160, 162, 164 (e.g., with a positive main coupled to the positive contacts and a negative main coupled to the negative contacts). The power source 156 can be implemented in different ways. For example, the power source 156 can include a direct current ("DC") voltage source, a DC current source, an alternating current ("AC") voltage source, an AC current source, etc. As a more specific example, the power source 156 can be an energy storage device (e.g., a battery), an electric grid, a power outlet, power lines, etc. In some non-limiting examples, the power source 156 can include a rectifier (e.g., when the power source 156 includes an AC source), a regulator (e.g., a voltage regulator), an inverter, a transformer, etc., to appropriately deliver electrical power through the pairs of electrical contacts 160, 162, 162.

In some non-limiting examples, the power source 156 can define a plurality power sources, with each power source electrically connected to a pair of electrical contacts. For example, a first power source (e.g., a power cable) can be electrically connected to the pair of electrical contacts 160 (e.g., and the pairs of electrical contacts 162, 164 being electrically isolated from the first power source), a second power source (e.g., a power cable) can be electrically connected to the pair of electrical contacts 162 (e.g., and the pairs of electrical contacts 160, 164 being electrically isolated from the second power source), and a third power source (e.g., a power cable) can be electrically connected to the pair of electrical contacts 164 (e.g., and the pairs of electrical contacts 160, 162 being electrically isolated from the third power source).

In some non-limiting examples, each of the first, second, and third power sources can have a negative terminal and a positive terminal, with each positive terminal connected to a respective positive contact of each pair of electrical contacts 160, 162, 164, and with each negative terminal connected to a respective negative contact of each pair of electrical contacts 160, 162, 164. In alternative configurations, the power source 156 can have a positive terminal that is electrically connected to each positive contact of each pair of electrical contacts 160, 162, 164, and a negative terminal that is electrically connected to each negative contact of each pair of electrical contacts 160, 162, 164.

In some non-limiting examples, the mounting assembly arm 152 can include a mechanical stop 176 that can be configured to block further rotation of the charger plate assembly 150 beyond the mechanical stop or protrusion 176 (e.g., to limit rotational movement away from the biased rotational position during engagement between the charging port 132 and the charger plate assembly 150). For example, in the illustrated non-limiting example of FIG. 1, as the charger plate assembly 150 rotates in a counterclockwise direction about the pivot point 168, the charger plate assembly 150, and in particular the plate 158, can contact the mechanical stop 176 to block further counterclockwise rotation about the pivot point 168. In some non-limiting examples, the mechanical stop 176 can be configured (e.g., sized, positioned, etc.) so that when the charger plate assembly 150 contacts the mechanical stop 176, the charger plate assembly 150 (e.g., the planar surface of the plate 158 through which the electrical contacts 160, 162, 164 extend, and/or a free end surface of an electrical contact of the charger plate assembly 150) aligns with (e.g., is parallel to) the vertical axis 170.

In some non-limiting examples, such as when the battery pack 124 is low on power (e.g., below a battery state of charge percentage, or in other words a charge level), the vehicle controller 122 can cause or instruct the material handling vehicle 102 to travel to the charging system 104. For example, an operator can manipulate the steering system 116 (e.g., via a signal received by the vehicle controller 122), or when the material handling vehicle 102 is operating in an autonomous mode, the vehicle controller 122 can cause the material handling vehicle 102 to travel to the charging system 104 (e.g., via causing a motor to turn the one or more of the wheels 110). Correspondingly, the vehicle controller 122 can cause, via movement of the material handling vehicle 102, the charging port 132 to be aligned with the charger plate assembly 150 of the charging system 104 to enable charging of the battery pack 124. In particular, this can include the material handling vehicle 102 traveling to a predefined location or position relative to the charging system 104, and the mounting assembly arm 152 can translate to bring the charger plate assembly 150 into alignment and engagement with the charging port 132.

As the charger plate assembly 150 is brought closer to the charging port 132, the charging port 132 of the material handling vehicle 102 can be brought into contact with the charger plate assembly 150. Following an initial contact between the charging port 132 and the charger plate assembly 150, continued movement of the charger plate assembly 150 toward the charging port 132 can cause the charger plate assembly 150 to rotate about the pivot point 168 (e.g., in a counterclockwise direction relative in FIG. 1) until the charger plate assembly 150 aligns with an axis (e.g., the vertical axis 170), so that the surface of each electrical contact of the charger plate assembly 150 and the planar surface of the plate 158 are parallel to the vertical axis 170. More generally, the contact between the charger plate assembly 150 and the charging port 132 can cause the charger plate assembly 150 to rotate about the pivot point 168 from a first rotational position until the contacts of the charger plate assembly 150 are fully aligned and in contact with the contacts of the charging port 132 in a second rotational position (e.g., where the contacts are flat plates, the contacts can be parallel to one another).

As the charger plate assembly 150 moves (e.g., rotates) from the first rotational position to the second rotational position, each electrical contact 160, 162, 164 of the charger plate assembly 150 can slide across (or in some non-limiting examples brush against) a respective electrical contact 134, 136, 138 of the charging port 132, causing sliding frictional contact therebetween. In this way, the sliding (or scrubbing) action between respective electrical contacts can dislodge debris or otherwise remove other sources of contamination from the electrical contact surfaces (e.g., can scrub off an oxide layer that may build up on one or more contacts). When each pair of electrical contacts 160, 162, 164 of the charger plate assembly 150 contacts a respective pair of electrical contacts 134, 136, 138 of the charging port 132, power can flow from the power source 156 and to the rechargeable batteries 126, 128, 130, which recharges the rechargeable batteries 126, 128, 130. By removing debris and other contaminants the contact surfaces and electrical connections can be formed between the contacts, which can increase overall charging efficiency.

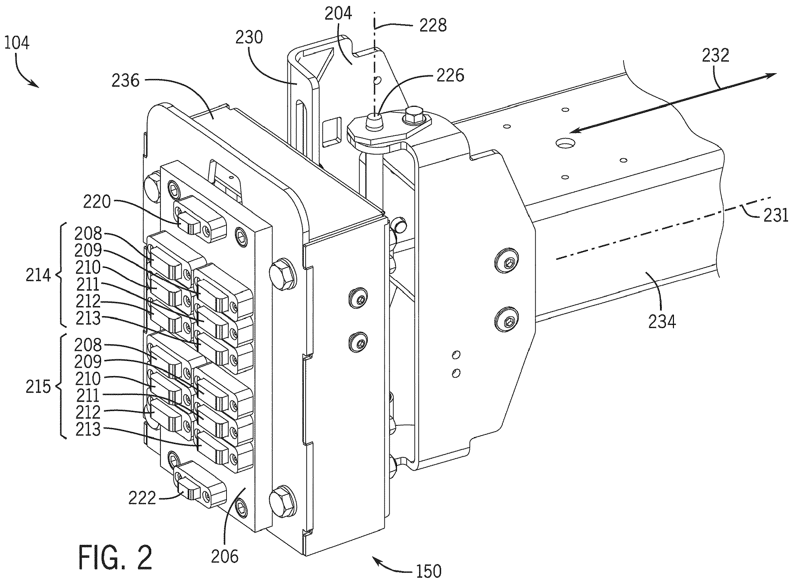

FIG. 2 illustrates a charger plate assembly 150 and a mounting assembly arm 234 that may be implemented in the charging system 104. The charger plate assembly 150 can be electrically connected to a power source (e.g., the power source 156) and can include a plate 206, and a plurality of electrical contacts coupled to the plate 206, for example, six pairs of electrical contacts 208, 209, 210, 211, 212, 213. In other non-limiting examples, more or fewer electrical contacts can be provided.

In some non-limiting examples, each pair of electrical contacts 208, 210, 212 can include a respective positive electrical contact, and each pair of electrical contacts 208, 210, 212 includes a respective negative electrical contact. Regardless of the particular contact configuration, when the electrical contacts 208, 210, 212 engage corresponding electrical contacts on a charging port of a material handling vehicle, power can flow from the power source to charge a battery or a battery pack 124 of the material handling vehicle 102.

As shown in the illustrated non-limiting example, the various contacts can be arranged into sets of electrical contacts. For example, a first set of electrical contacts 214 and a second set of electrical contacts 215. The first set of electrical contacts 214 can include the positive electrical contacts of the pairs of electrical contacts 208-213, which can be arranged together adjacent to a first end of the plate 206 (e.g., to collectively form a first, positive electrical power contact). The second set of electrical contacts 215 can include the corresponding negative electrical contacts of the pairs of electrical contacts 208-213, which can be arranged together adjacent to a second end of the plate 206 (e.g., to collectively form a second, negative electrical power contact). The first set of electrical contacts 214 may be arranged to interface with a first charging plate on the material handling vehicle 102 (e.g., a corresponding first, positive electrical power contact) and the second set of electrical contacts 215 may be configured to interface with a second charging plate on the material handling vehicle 102 (e.g., a corresponding second, negative electrical power contact). Accordingly, it is possible that a contact, for example, a contact on either the charging port 132 or the charger plate assembly 150, can be a shared contact that corresponds with one or more contacts on the other of the charging port 132 or the charger plate assembly 150.

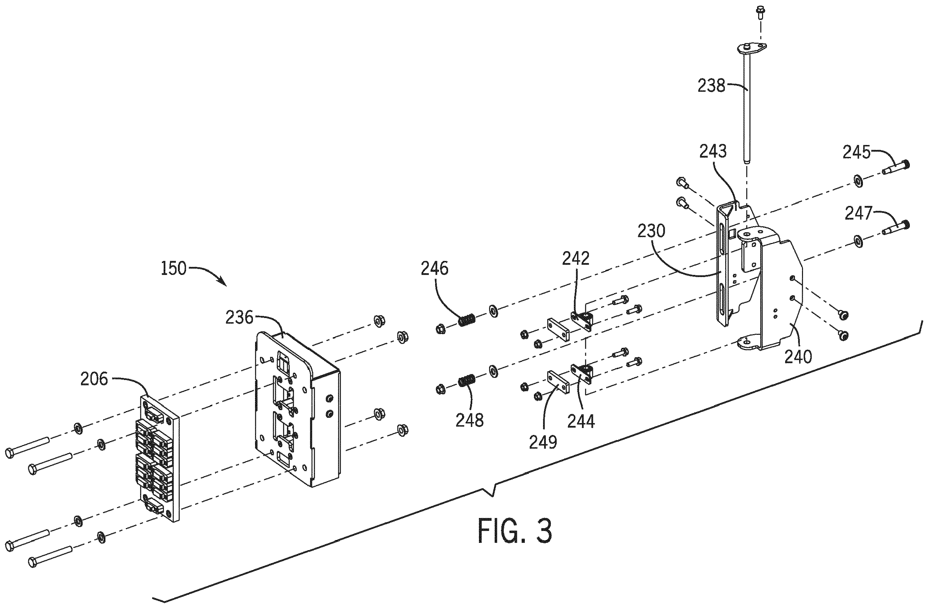

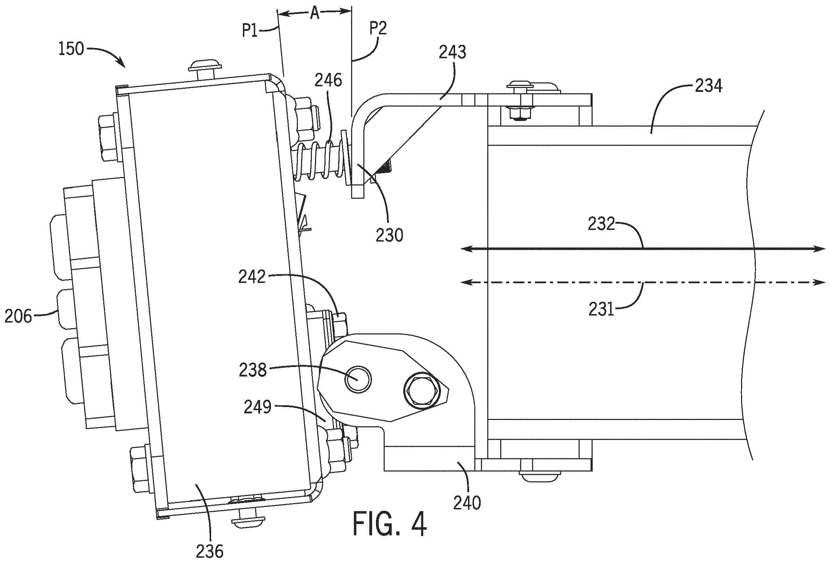

With continued reference to FIGS. 2-4, the charger plate assembly 150 can be pivotally coupled to the mounting assembly arm 234 and can be configured to rotate about a pivot point 226 that defines a rotational axis 228. The charger plate assembly 150 can be biased toward an angular position relative to the mounting assembly arm 234. For example, in the illustrated non-limiting example, the charger plate assembly 150 is biased so that the plate 206, which can be planar, is arranged relative to mounting assembly arm 234 at a non-zero angle. That is, when the charger plate assembly 150 is in a first orientation, in which no external force applied to the charger plate assembly 150, the charger plate assembly 150 may be arranged relative to the mounting assembly arm 234 so that a head plane P1 that is arranged parallel to the front surface of the plate 206 forms an angle A greater than zero with respect to a mounting plane P2 that is arranged parallel to a front surface of a flange 230 of the mounting assembly arm 234 (see FIG. 4).

In some non-limiting examples, and as illustrated, the mounting assembly arm 234 can include a mechanical stop to limit rotation of the charger plate assembly 150. For example, in the illustrated non-limiting example, the mounting assembly arm can include a stop configured as a flange 230, which can contact the charger plate assembly 150 to control (e.g., limit) rotation of the charger plate assembly 150 about the rotational axis 228. For example, as shown relative to FIG. 4, when the charger plate assembly 150 rotates in the clockwise direction about the rotational axis 228 and contacts the flange 230, the flange 230 can prevent further clockwise rotation of the charger plate assembly 150, which can maintain the charger plate assembly 150 so that the plate 206 is perpendicular to a first direction 232 that corresponds with a longitudinal axis 231 of the mounting assembly arm 234 (e.g., which is perpendicular to the rotational axis 228). In other words, when an external force is applied to the charger plate assembly 150 and the charger plate assembly 150 can rotate about the rotational axis 228 until the charger plate engages the flange 230 (e.g., the charger plate assembly 150 is in a second orientation), for example, so that the head plane P 1 is approximately parallel or at another predetermined angle relative to the mounting plane P2.

The charger plate assembly 150 can include a housing 236 that can be coupled to the plate 206, for example, with fasteners (e.g., screws or bolts) or another coupling (e.g., welding or a press fit connection), and that can be pivotally coupled to the mounting assembly arm 234. For example, in the illustrated non-limiting example, the housing 236 is pivotally coupled to the mounting assembly arm 234 by a shaft 238. The shaft 238 can be inserted through holes in a first bracket 240, which can be coupled to a distal end of the mounting assembly arm 234. In some cases, the shaft 238 can be rotationally fixed relative to the first bracket. For example, in the illustrated non-limiting example, the shaft 238 can be coupled and rotationally fixed relative to the first bracket 240 by a fastener (e.g., an end of the shaft 238 can be secured to the first bracket 240 by screw or bolt, or other type of connection, such as a press fit connection).

In some cases, the shaft 238 can be inserted through bearings 242, 244 that can be positioned axially between (e.g., along an axial direction defined by rotational axis 228 or the shaft 238) the holes of the first bracket 240. Each bearing 242, 244 can be configured to couple to the housing 236 (e.g., via fasteners or another type of connection). The bearings 242, 244 can be rotatably coupled on the shaft 238 so that the bearings 242, 244 and the housing 236 can rotate (e.g., pivot) together about the rotational axis 228 of the shaft 238. In some non-limiting examples, a spacer 249 can be arranged between each of the bearings 242, 244 and the housing 236.

The charger plate assembly 150 can also include one or more biasing elements (e.g., springs or another type of resilient member) that can be coupled between the housing 236 and the mounting assembly arm 234 (e.g., at a second bracket 243 that can be coupled to a distal end of the mounting assembly arm 234 and laterally spaced from the first bracket 240) to bias the charger plate assembly 150 into the angled orientation relative to the mounting assembly arm 234. In the illustrated non-limiting example, the charger plate assembly include two biasing elements that are configured as springs 246, 248, although other types of biasing elements can also be used. To secure the springs 246, 248 between the housing 236 and the mounting assembly arm 234, fasteners 245, 247 can be inserted through a respective slot in the flange 230 and can each receive a respective spring 246, 248. An end of each fastener 245, 247 can be inserted through a hole in the housing 236 and a respective nut can be threaded onto each fastener 245, 247 to secure the fastener to the housing 236. In the illustrated non-limiting example, the fasteners 245, 247 can be configured as a screw or bolt, although other types of fasteners can also be used. In other non-limiting examples, other methods of rotationally biasing the charger plate assembly 150 away from the mounting assembly arm 234 can also be used.

As a result, each spring 246, 248 can be positioned to abut the flange 230 and the housing 236 to force or displace the housing 236 into the angled orientation relative to the mounting assembly arm 234. For example, each spring 246, 248 may have a predetermined preload to rotationally bias the charger plate assembly 150 away from the mounting assembly arm 234 (e.g., to maintain an angle A between the head plane P1 and the mounting plane P2). When the housing 236 is rotated about the rotational axis 228 to reduce the angle A between the head plane P1 and the mounting plane (e.g., in a clockwise direction with respect to the view in FIG. 4), such as when a charging port on a material handling vehicle contacts the charger plate assembly 150, the springs 246, 248 can store mechanical energy (e.g., via compression or other deformation of the spring). This stored mechanical energy, when released, can force or displace the housing 236 to rotate it back to the angled orientation, so as to reattain the angle A between the head plane P1 and the mounting plane P2 when the charger plate assembly 150 is no longer in contact with the material handling vehicle 102.

As shown in FIG. 4, and described above, the charger plate assembly 150 can be arranged at an angle A, defined between head plane P1 and the mounting plane P2, relative to the mounting assembly arm 234, when no external force is applied to the charger plate assembly 150. In some non-limiting examples, the angle A can be between about 0 degrees and about 45 degrees, preferably between about 1 degree and about 30 degrees, more preferably between about 2 degrees and about 20 degrees, still more preferably between about 4 degrees and about 10 degrees, and in some instances about 6 degrees.

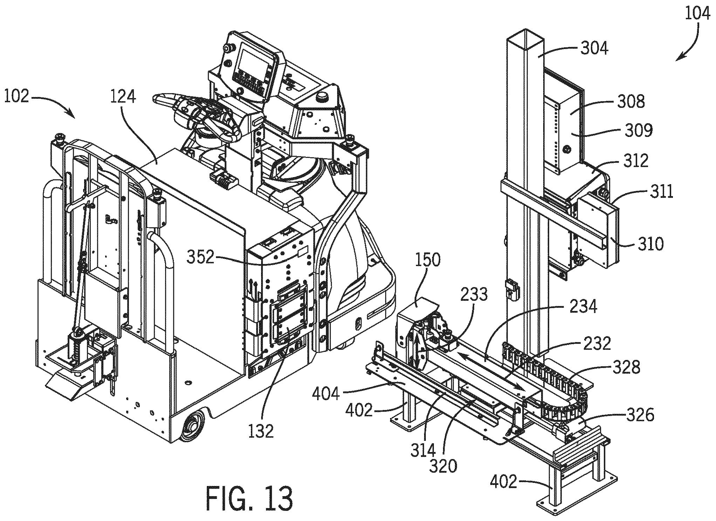

In some non-limiting examples, a material handling vehicle can be configured to communicate with a charging head assembly (e.g., a charger) to control charging of the material handling vehicle. For example, a vehicle controller or other battery management system can operate a wireless or wired communication link between the material handling vehicle and the charging head assembly to control a flow current (e.g., a magnitude of current and/or magnitude of voltage) between the charging head assembly and a charging port of the material handling vehicle. In the illustrated non-limiting example, the material handling vehicle 102 is configured to communicate and control a charging event over a wired communication link, for example, via a CAN bus, Serial bus, or Modbus of the material handling vehicle 102. In some non-limiting examples, the vehicle controller 122 can be configured to communicate over a CAN bus using the various charging contacts at a charging port (e.g., pairs of electrical contacts 134, 136, 138) and at a charging head assembly (e.g., the pairs of electrical contacts 160, 162, 164, 208, 210, 212). In some non-limiting examples, and as described in greater detail below, the vehicle controller 122 can be configured to communicate over a CAN bus using dedicated communication contacts at each of a charging port and a charging head assembly. For example, in the illustrated non-limiting example the charger plate assembly 150 can include a first communication contact 220 and a second communication contact 222. CAN communication can either read the battery state of charge from the battery or from the MHV. More specifically, the battery state of charge is available from the battery charger and the information regarding the battery state of charge can be passed from the battery to the MHV in order to update the MHV battery state of charge and corresponding display. The MHV parameters can also be viewed, requested, or edited by the controller (See FIG. 13, 309) using CAN communication. For example, the parameters can include truck identifiers such as serial number. Additionally, the version of the operating system, operation conditions (such as operating hours), error codes, and sensors could be viewed or updated.

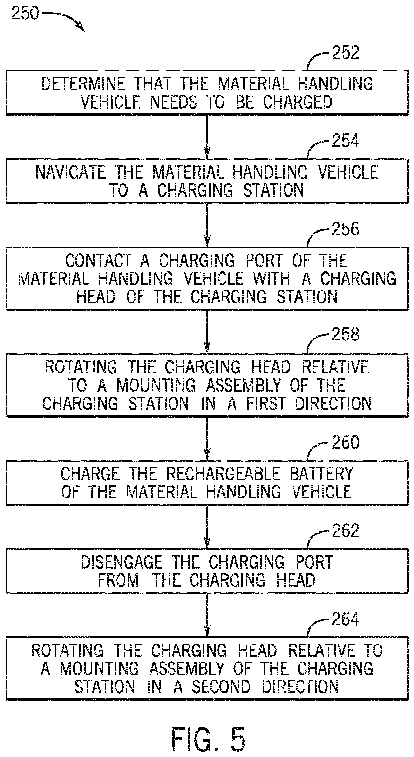

FIG. 5 shows a flowchart of a process 250 for charging a material handling vehicle (e.g., the material handling vehicle 102), which can be implemented using one or more computing devices (e.g., the vehicle controller 122), as appropriate, including, for example, any of the previously described systems. At step 252, the process 250 can include determining that the material handling vehicle needs to be charged. For example, this can include the vehicle controller 122 comparing a charge level (e.g., a voltage, a current, and/or a state of charge) of one or more rechargeable batteries of the material handling vehicle and comparing the charge level to a threshold. If the computing device determines that the charge level is at or less than the threshold, the vehicle controller 122 can determine that the material handling vehicle needs to be charged. It is appreciated that a battery can also be charged according to other criteria. For example, charging can occur when a material handling vehicle is not being used, for example, between work shifts or between work tasks, regardless of a state of charge of the battery.

At step 254, the process 250 can include driving, either manually by an operator or autonomously, the material handling vehicle to a charging station. For example, the material handling vehicle can travel to a predefined location relative to a charger plate assembly (e.g., the charger plate assembly 150). At step 256, the process 250 can include aligning the charger plate assembly with the charging port and contacting a charging port (the charging port 132) of the material handling vehicle with a charger plate assembly of a charging system (e.g., the charger plate assembly 150). For example, in some cases, a mounting assembly arm (e.g., the mounting assembly arm 234) can be provided on a stand or base that can be configured to translate or otherwise move the charger plate assembly into engagement with a charging port on the material handling vehicle.

At step 258, the process 250 can include the charger plate assembly being rotated (e.g., by contact between the charger plate assembly and a charging port) relative to a mounting assembly arm of the charging system (e.g., the mounting assembly arm 234) in a first rotational direction by the engagement with the charging port. With the charging port contacting the charger plate assembly to cause the charger plate assembly to rotate relative to the mounting assembly arm of the charging system, each electrical contact of the charger plate assembly slides (and scrubs) against each respective electrical contact of the charging port of the material handling vehicle, thereby cleaning the contacts. At step 260, the process 250 can include a computing device, or an operator, charging the rechargeable battery of the material handling vehicle. For example, with the charging port contacting the charger plate assembly for charging, a vehicle control system can communicate with the charger plate assembly to control an electrical current that is supplied to charge a battery of the material handling vehicle. Such communications can be wireless communications or wired communications. As mentioned above, wired communications can be facilitated over a CAN bus of the material handling vehicle, either through the contacts configured for charging, or through a separate set of communication contacts.

At step 262, the process 250 can include disengaging the charging port from the charger plate assembly by the mounting assembly arm translating away from the material handling vehicle. As this occurs, at step 264, the charger plate assembly can rotate relative to the mounting assembly arm of the charging station in a second direction (opposite the first direction). Rotation of the charger plate assembly can be cause by a biasing element (e.g., springs 246, 248). In this way, again, each electrical contact of the charger plate assembly slides across (and brushes against) each respective electrical contact of the charging port of the material handling vehicle in an opposing direction than at the step 258 of the process 250. Thus, each time the material handling vehicle engages the charger plate assembly, and each time the material handling vehicle disengages the charger plate assembly, the electrical contacts of both the charging port of the material handling vehicle and the charger plate assembly can be passively cleaned, scrubbed, etc.

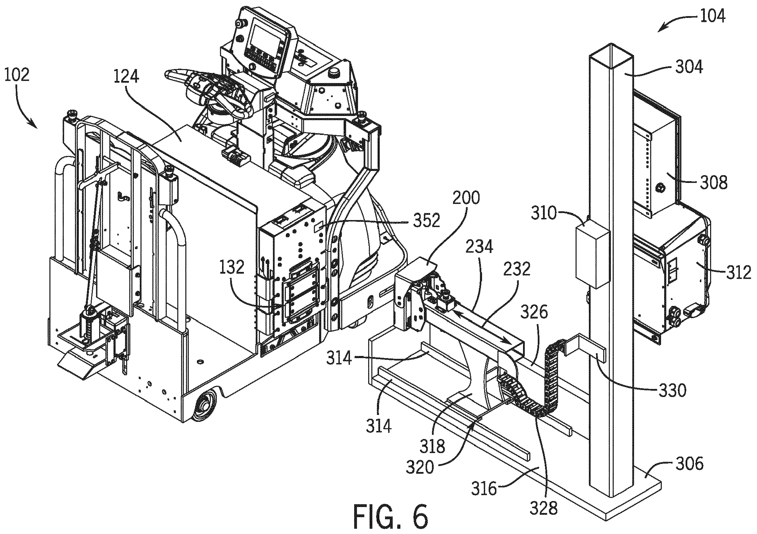

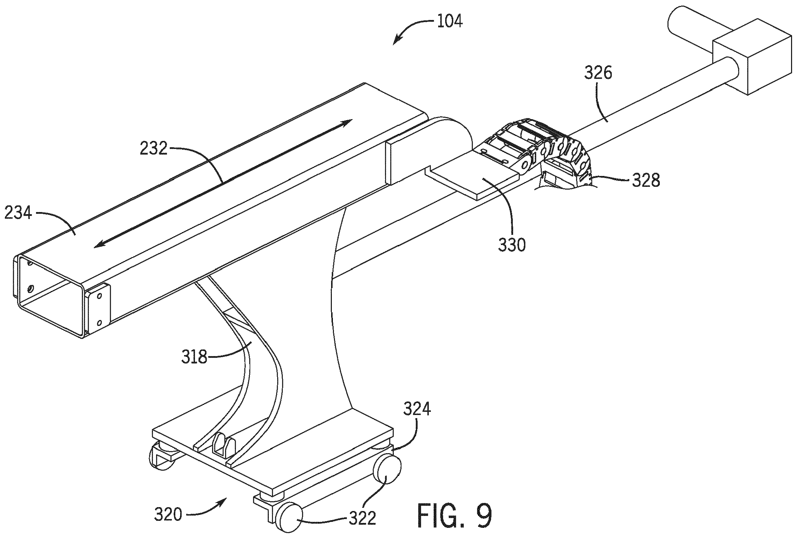

As described herein, the charger plate assembly 150 can be coupled to a moveable (e.g., translating) mounting assembly arm. Additionally, in some non-limiting examples, the charger plate assembly 150 is configured to be vertically adjustable (e.g., along the vertical axis 170) to selectively change a height defined by the charger plate assembly 150 (e.g., a height above a floor upon which a material handling vehicle is supported), as can accommodate for variations in material handling vehicle size and/or charging port placement on the material handling vehicle. FIGS. 6 and 9 illustrate a charging system 104 and a material handling vehicle 102 configured to be charged by the charging system 104.

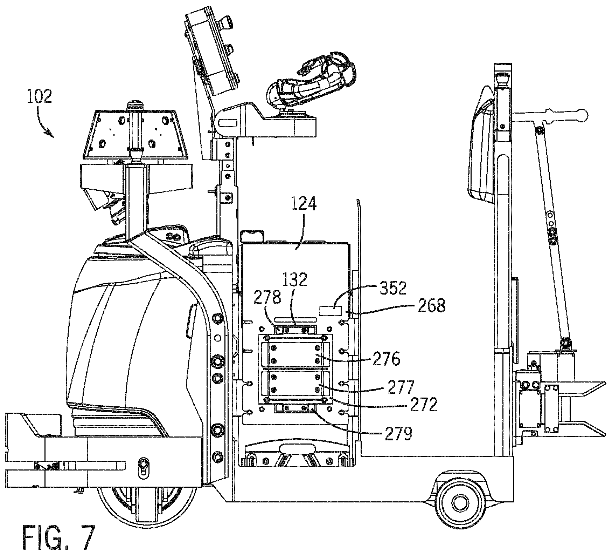

As illustrated in FIG. 6, the material handling vehicle 102 generally includes a vehicle body 106 that is configured to support a battery 124 and a vehicle controller 122 that can be configured to control one or more functions of the material handling vehicle 102, for example, charging of the battery 124. Additionally, the material handling vehicle 102 can include a charging port 132. With additional reference to FIG. 7, the charging port 132 can be secured to the side of the material handling vehicle 102, and more specifically, at a support bracket 268 that is coupled to a side of the material handling vehicle 102. The support bracket 268 can form part of an enclosure for the battery 124, which can help to secure the battery 124 on the material handling vehicle 102 during operation but may alternatively be secured to a different portion of the material handling vehicle 102 in other limiting examples. Correspondingly, the support bracket 268 can be removable to allow the battery 124 to be removed from the material handling vehicle 102, such as for maintenance, or to allow the battery 124 to be replaced at end of life.

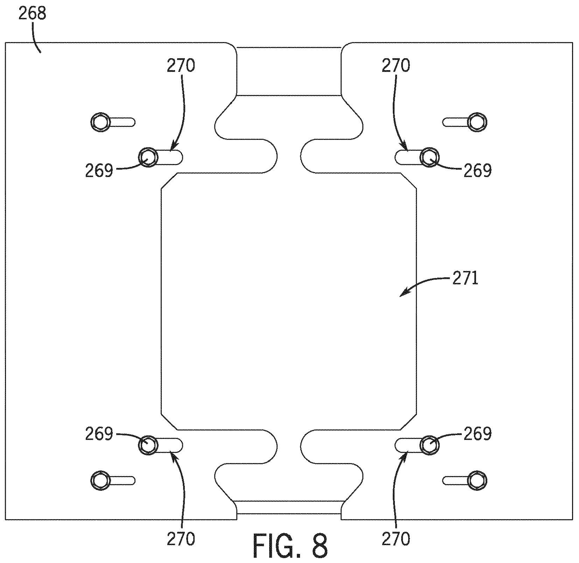

Further, the support bracket 268 can also be adjustable relative to the material handling vehicle 102, as may allow for the charging port 132 to be positioned on differently sized material handling vehicles. For example, with additional reference to FIG. 8, the charging port 132 can be secured to the support bracket 268 via fasteners 269 that can be received within elongated slots 270 formed in the support bracket 268. The elongated slots 270 can allow the charging port 132 to be adjusted along a front-to-back direction of the material handling vehicle 102. In other non-limiting examples, the charging port 132 can be secured to the support bracket 268 differently, for example, to allow the charging port 132 to be adjusted along a vertical direction of the material handling vehicle 102. Additionally, the support bracket 268 can include one or more openings 271 to provide a passage for any cables (e.g., charging or communication cables) that are coupled to the charging port 132.

With continued reference to FIG. 7, the charging port 132 can be configured as a charging plate with a base plate 272 that can support one or more electrical contacts, which can make a physical electrical connection with corresponding electrical contacts on, for example, a charging system (e.g., the charging system 104 or another charging device), allowing electrical power to be supplied to the battery 124 for charging. In the illustrated non-limiting example, the charging port 132 includes a pair of electrical power contacts configured for charging the battery 124. In particular, the electrical power contacts can include a first power contact 276, which can be a positive contact coupled to a positive terminal of the battery 124, and a second power contact 277, which can be a negative contact coupled to a negative terminal of the battery 124.

In the illustrated non-limiting example, the first and second power contacts 276, 277 are oversized to receive a corresponding plurality of contacts on the charger plate assembly 150. More specifically, the first power contact 276 can receive the first set of contacts 214 and the second power contact 277 can receive the second set of contacts 215. Because the first and second power contacts 276, 277 can be oversized relative to corresponding contacts on the charger plate assembly 150, the charging port 132 can accommodate some misalignment therebetween, for example, between 2 inches and 6 inches, or more, of misalignment in a vertical and/or lateral direction. In other non-limiting examples, the first and/or the second power contacts 276, 277 can be made of a plurality of contacts (e.g., to have a one-to-one correspondence with the contacts on the charger plate assembly 150).

In some non-limiting examples, the first and second power contacts 276, 277 can be exposed to the surrounding environment. Accordingly, the vehicle controller 122 (or another controller, such as a battery management system) can be configured to electrically isolate the first and second power contacts 276, 277 the from the electrical system of the material handling vehicle 102 (e.g., the battery 124) so that current does not flow through the first and second power contacts 276, 277 unless operatively coupled to the charging system 104. To selectively isolate the first and second power contacts 276, 277 in this way, the vehicle controller 122 can be configured to operate one or more contactors (e.g., a positive contactor and a negative contactor) of the material handling vehicle 102 to selectively electrically couple the first and second power contacts 276, 277 to the battery 124.

Correspondingly, and as mentioned above, in some non-limiting examples, the vehicle controller 122 can be configured to communicate with the charging system 104 to determine when to electrically couple the charging port 132 to the battery 124 for charging. For example, still referring to FIG. 7, the charging port 132 can further include one or more pilot contacts that can electrically couple to corresponding pilot contacts on a charging device, thereby completing a pilot circuit between the material handling vehicle 102 and the charging system 104. As illustrated, the charging port 132 includes a first communication contact 278 to couple with the corresponding first communication contact 220 of the charger plate assembly 150 (see FIG. 2), and a second communication contact 279 to couple with the corresponding second communication contact 22 of the charger plate assembly 150 (see FIG. 2). By electrically connecting the respective pairs of communication contacts, a communication link can be established between the vehicle controller 122 and the charging system 104 system, for example, to allow CAN communications to be sent therebetween.

In other non-limiting examples, the communication contacts can be configured differently. For example, the communication contacts can be configured as pilot contacts that can electrically couple to close a pilot circuit (i.e., to complete a pilot circuit between the material handling vehicle 102 and a charging system 104). The vehicle controller 122 can be configured to open and close the contactors based on the completion of the pilot circuit. Correspondingly, the first and second communication contacts 278, 279 can be arranged relative to the first and second power contacts 276, 277 so that the pilot circuit is only completed when the first and second communication contacts 278, 279 are covered by and electrically coupled to corresponding power contacts on the charger plate assembly 150.

In some non-limiting examples, any of the power contacts 276, 277 and the communication contacts 278, 279 can be configured as spring-biased contacts. In this way, the contacts can be compressed into the base plate 272 when in contact with the charger plate assembly 150, as may allow a predetermined pressure to be applied between the contacts of the charging port 132 and the charging system 104, and to account for variations in distance between the contact pairs (e.g., due to a relative location of the material handling vehicle and the charging system 104, and to accommodate for the rotational path of the contacts resulting from rotation of the charger plate assembly 150). Thus, the spring biased nature of the contacts can also increase a positional tolerance between the charging port 132 and the charger plate assembly 150.

The charging system 104 can include the charger plate assembly 150 and the mounting assembly arm 234. In the illustrated non-limiting example, the charging system 104 further includes a charger stand 304 and a floor plate 306 coupled to the charger stand 304. In the illustrated non-limiting example, the charger stand 304 includes a plurality of charging components coupled thereto. For example, the charger stand 304 includes a control box 308, a switch box 310, and a charger 312. The control box 308 may include a charger controller (e.g., a processor having memory) that is configured to monitor the charging performance of the charging system 104 and selectively control the operation of the charger 312. For example, the charger controller may be configured to selectively control one or more output parameters from the charger 312 (e.g., voltage, current, power, duty cycle, waveform, etc.) during charging operations. The charger 312 may be connected to a power source (e.g., wall power) and may be configured to output a current to the electrical contacts of the charger plate assembly 150. As previously mentioned, the current can be commanded by a material handling vehicle, or it can be a predefined current.

In the illustrated non-limiting example, the mounting assembly arm 234 is slidably coupled to the floor plate 306 so that the mounting assembly arm 234 can selectively translate along the floor plate 306. Correspondingly, the floor plate 306 can include one or more tracks or guide rails 314 along which the mounting assembly arm 234 can translate. The guide rails 314 can be supported on an upper surface 316 of the floor plate 306 and can extend longitudinally along at least a portion of the upper surface 316. The mounting assembly arm 234 can include a pair of support brackets 318 that can extend between the mounting assembly arm 234 and a carriage assembly. The support brackets 318 can provide a coupling between the mounting assembly arm 234 and the carriage assembly 320.

In the illustrated non-limiting example, the carriage assembly 320 includes a plurality of wheels 322 rotatably coupled to a carriage base 324 (see FIG. 9). The wheels 322 can be arranged to interface with the guide rails 314 (e.g., to be received in or on the guide rails 314) so that the wheels 322 can translate along the guide rails 314 in at least two directions. To translate the mounting assembly arm 234, an actuator 326 (e.g., a linear actuator, ball screw, etc.) can be coupled between the mounting assembly arm 234 and the charger stand 304 so that the mounting assembly arm 234 can be selectively translated along the guide rails 314. For example, the actuator 326 can be operated (e.g., extended or retracted) to cause the mounting assembly arm 234 to translate along the first direction 232 via the actuator 326 displacing the mounting assembly arm 234, which results in the wheels 322 traveling along the guide rails 314. In the illustrated non-limiting example, the actuator 326 is coupled to the mounting assembly arm 234 at the support bracket 318. In some non-limiting examples, the actuator 326 may be in the form of an electric actuator, a pneumatic actuator, a hydraulic actuator, or an electrohydraulic actuator. In some non-limiting examples, the actuator 326 may be in communication with the charger controller and the charger controller may be configured to control the position of the actuator 326, and thereby a position of the mounting assembly arm 234 along the guide rails 314. In some non-limiting examples, the actuator 326 may include an integrated position sensor (e.g., a hall effect sensor) that senses an output position of the actuator 326, or a position of the charger plate assembly 150 relative to a charging port of the material handling vehicle 102.

In some cases, a conduit 328 can be coupled between the charger stand 304 and the mounting assembly arm 234 to control and retain any power cables or other electrical wiring during operation. Correspondingly, one or both the charger stand 304 and the mounting assembly arm 234 can include an electrical bracket 330 coupled thereto for connecting to the conduit 328. In some non-limiting examples, cables and electrical wiring may be routed between the charger stand 304 and the mounting assembly arm 234 (and then on to the charger plate assembly 150) through the conduit 328.

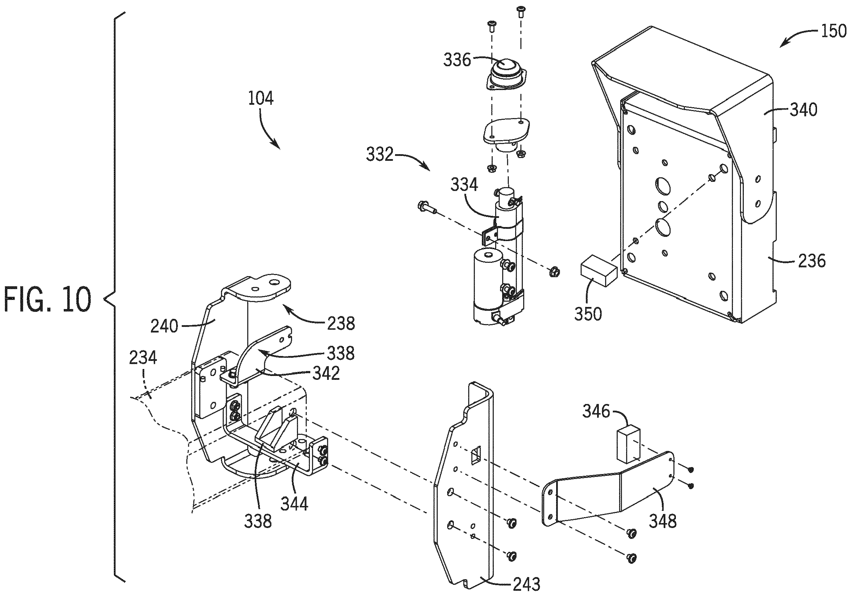

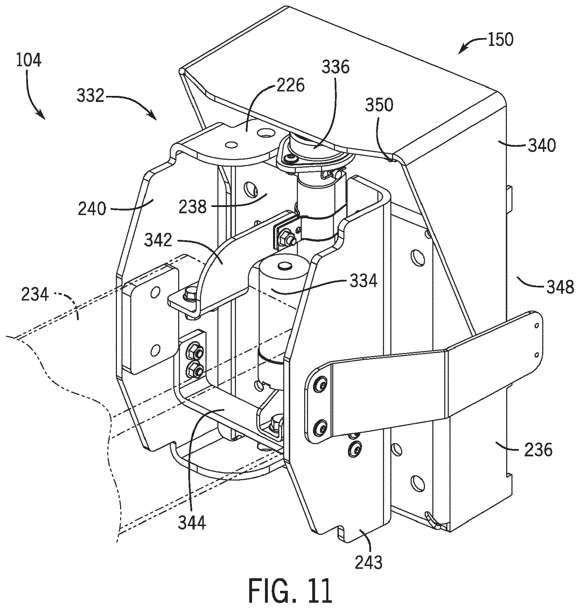

Turning to FIGS. 10 and 11, in some non-limiting examples, the charger plate assembly 150 can include a vertical adjustment assembly 332 that can be configured to selectively adjust a vertical height of the charger plate assembly 150. It should be appreciated that some components of the charger plate assembly 150 are hidden or shown as transparent (e.g., the shaft 238, the bearings 242, 244, the springs 248, etc.) to make the vertical adjustment assembly 332 more visible. The vertical adjustment assembly 332 includes a lift actuator 334, a rotational bearing 336 (e.g., a roller bearing or bushing), lift mounting brackets 338, and a lifting plate 340.

In the illustrated non-limiting example, the lift actuator 334 can be coupled to the mounting assembly arm 234 by the lift mounting brackets 338. For example, a first lift bracket 342 can extend between the mounting assembly arm 234 and the lift actuator 334 to suspend the lift actuator 334 from the distal end of the mounting assembly arm 234. A second lift bracket 344 can be coupled between the first bracket 240 and the second bracket 243 to support a bottom end of the lift actuator 334 to provide a rigid base for the lift actuator 334 to push against. In some non-limiting examples, the lift actuator 334 may be in the form of an electric actuator, a pneumatic actuator, a hydraulic actuator, or an electrohydraulic actuator. A distal end of the lift actuator 334 (i.e., a distal end of a piston of the lift actuator 334) can be coupled to the roller bearing 336. More specifically, the roller bearing 336 can be rotatably coupled to the distal end of the lift actuator 334 so that the roller bearing 336 can rotate relative to the lift actuator 334.

The lifting plate 340 can be coupled to laterally-opposing sides of the housing 236 and can extend around a top side of the housing 236 to come into engagement with the roller bearing 336. The roller bearing 336 can engage a bottom surface of the lifting plate 340. In the illustrated non-limiting example, the engagement between the lift actuator 334 and the housing 236 is limited to the interface between the roller bearing 336 and the lifting plate 340, which is coupled to the housing 236. In this way, the rotational properties of the roller bearing 336 can allow the housing 236 to pivot about the pivot point 226, as described above, while maintaining the ability to adjust a vertical position or height of the charger plate assembly 150. For example, the lift actuator 334 may be selectively instructed to raise a vertical position or height of the charger plate assembly 150 (e.g., by the charger controller that is in communication with the lift actuator 334). The lift actuator 334 may then extend or displace the piston and the roller bearing 336, which applies a force to and displaces the lifting plate 340. Because the lifting plate 340 is coupled to the housing 236, the displacement of the lifting plate 340 results in the housing 236 displacing upward (e.g., relative to the floor) with the lifting plate 340. Similarly, the lift actuator 334 may also be utilized to lower a vertical position or height of the charger plate assembly 150.

In some non-limiting examples, the charger plate assembly 150 can include one or more sensors that can aid in aligning the electrical contacts on the charger plate assembly 150 with the electrical contacts on the material handling vehicle 102 (see FIG. 6). For example, as shown in FIG. 10, the charger plate assembly 150 can include a first, distance sensor 346 coupled to a sensor bracket 348. In the illustrated non-limiting example, the sensor bracket 348 can be coupled to the second bracket 243. In general, the distance sensor 346 can be configured to sense a distance or proximity between the distance sensor 346 and a side of the material handling vehicle 102 (e.g., a side of the vehicle upon which a charging port is located). In some non-limiting examples, the distance sensor 346 may be in the form of an ultrasonic sensor, an infrared sensor, a time-of-flight sensor, or a laser sensor (e.g., a LIDAR sensor).

In some non-limiting examples, the charger plate assembly 150 can include a second, height sensor 350 that can be configured to detect a target 352 on a material handling vehicle (see, FIGS. 6 and 7) to allow for vertical alignment between the charger plate assembly 150 and the charging port. In some non-limiting examples, the target 352 may be a dedicated component that is added to the material handling vehicle (e.g., a reflector or receiver). In some non-limiting examples, the target 352 may be a feature already mounted on the material handling vehicle 102 (e.g., a corner or an edge of a part on the side of the material handling vehicle 102). In some non-limiting examples, the height sensor 350 may be in the form of a photoelectric sensor, a laser sensor, an inductive sensor, or a capacitive sensor. The target 352 can be mounted on the side of the material handling vehicle 102 (e.g., either on or adjacent to a charging port 132 on the material handling vehicle 102) in a predefined location so that when the height sensor 350 aligns with and senses the target 352, the electrical contacts of the charger plate assembly 150 and the electrical contacts on the charging port 132 are aligned vertically. As shown in FIG. 10, in the illustrated non-limiting example, the height sensor 350 can be mounted on the bottom surface of the lifting plate 340 (i.e., the surface that the roller bearing 336 engages).

With reference to FIGS. 6-10, a charging process or method 500 for charging the material handling vehicle 102 may initiate at step 502 by determining that a battery or a battery pack 124 on the material handling vehicle 102 (see FIG. 6) should be charged, e.g., via a vehicle controller of the material handling vehicle, a battery management system, or an external warehouse management system102. If charging is needed or otherwise desired, the material handling vehicle 102 can then navigate, either autonomously, remotely, or via an operator, to a predefined position relative to the charging system 104, at step 504. With the material handling vehicle 102 in the predefined position, the charging system 104 can extend the mounting assembly arm 234, at step 506, until the distance sensor 346 senses that the charger plate assembly 150 is a predefined distance away from the charging port 132 on the material handling vehicle 102.

In some embodiments, the mounting assembly arm 234 and the charger plate assembly 150 may initially be in a home position (e.g., a fully retracted position) prior to extending toward the charging port 132. For example, the home position may be defined as the mounting assembly arm 234 being fully retracted (e.g., arranged as close as possible to the charger stand 304 along the guide rails 314) and the charger plate assembly 150 being arranged at a minimum height (e.g., as close to the floor as possible with the lift actuator 334 fully retracted). In some non-limiting examples, extending the mounting assembly arm 234 at step 506 can include the charger controller instructing the actuator 326 to extend. This can result in the mounting assembly arm 234 translating along the guide rails 314 until the distance sensor 346 senses the predefined distance, at which point the actuator 326 can be instructed to stop extending the mounting assembly arm 234.

Once the charger plate assembly 150 is arranged the predefined distance from the charging port 132, the mounting assembly arm 234 may stop translating toward the charging port 132 and the charger plate assembly 150 is raised or adjusted vertically at step 508 until the height sensor 350 detects the target 352 on the material handling vehicle 102. In some non-limiting examples, vertically adjusting the charger plate assembly 150 at step 508 can include the charger controller instructing the lift actuator 334 to extend. This results in the charger plate assembly 150 raising in height (e.g., relative to the floor) until the height sensor 350 detects the target 352. The height sensor 350 detecting the target 352 can ensure that the electrical contacts on the charger plate assembly 150 and the electrical contacts on the charging port 132 are aligned. The mounting assembly arm 234 can then continue to extend at step 510 until contact is made between the charger plate assembly 150 and the charging port 132.

As contact is made with the charging port 132, and subsequent disengagement occurs after charging, the steps 258-264 of the process 250 may occur between or during steps 510 and 412 in the method 500. For example, as the charger plate assembly 150 engages the charging port 132, the charger plate assembly 150 can be rotated relative to the mounting assembly arm 234 in a first rotational direction by the engagement with the charging port 132. With the charging port 132 contacting the charger plate assembly 150 and with the charger plate assembly 150 rotating relative to the mounting assembly arm 234, each electrical contact of the charger plate assembly 150 slides (and scrubs) against each respective electrical contact of the charging port 132 of the material handling vehicle 102. The various movements of the charging system 104 (e.g., those described in accordance with steps 506-510), can occur stepwise or simultaneously, or any combination thereof.

Once contact is confirmed (e.g., by the charging controller, via a communication link with the material handling vehicle 102), the battery 124 of the material handling vehicle 102 can be charged by the charger 312. In some non-limiting examples, an electrical connection that initiates and stops charging between the electrical contacts of the charger plate assembly 150 and the electrical contacts of the charging port 132 may be selectively controlled by a switch or contactor that is arranged, for example, in the switch box 310.

Once charging is complete, at step 512, the mounting assembly arm 234 can be retracted from the charging port 132, which disengages the charging port 132 from the charger plate assembly 150. As this occurs, the charger plate assembly 150 rotates relative to the mounting assembly arm 234 in a second direction (opposite the first direction). In this way, again each electrical contact of the charger plate assembly 150 can slide across (and brushes against) each respective electrical contact of the charging port 132 of the material handling vehicle 102 in an opposing direction. Thus, each time the charger plate assembly 150 engages and disengages the charging port 132, the electrical contacts of both the charging port 132 of the material handling vehicle 102 and the charger plate assembly 150 can be passively cleaned, scrubbed, etc. In addition, the mounting assembly arm 234 may be retracted to the home position, and either during or after the mounting assembly arm 234 is retracted to the home position, the charger plate assembly 150 may be lowered to its vertical home position (i.e., lowest position).

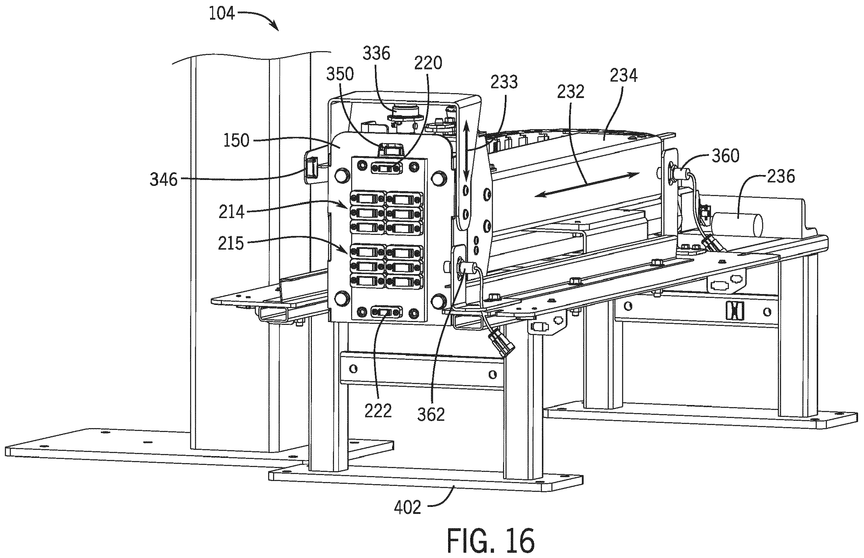

FIGS. 13-16 illustrate another non-limiting example of the charging system 104 and the material handling vehicle 102. As mentioned above, the charging system 104 can be configured to charge the battery 124 of the material handling vehicle 102. The charging system 104 can be configured as an automatic charging device and can include a charger plate assembly 150, which, as generally discussed above, can be configured to operatively couple with the charging port 132 (e.g., to include corresponding power contacts and, where included, communication contacts). Thus, in the illustrated non-limiting example, the charger plate assembly 150 includes a first power or charging contact that includes a plurality of first power contacts 214 and a second power or charging contact that includes a plurality of second power contacts 215. The plurality of first power contacts 214 can be configured to electrically couple to the first power contact 276 of the charging port 132 (see FIG. 7) and the plurality of second power contacts 215 can be configured to electrically couple to the second power contact 277 of the charging port 132 (see FIG. 7) to charge the battery 124.

Additionally, the charger plate assembly 150 can further include communication contacts, namely, a first communication contact 220 to electrically couple with the first communication contact 278 of the charging port 132 (see FIG. 7) and a second communication contact 222 to electrically couple with the second communication contact 279 of the charging port 132 (see FIG. 7). Accordingly, when the charger plate assembly 150 is moved so that power contacts 214, 215 are electrically coupled to the power contacts 276, 277 on the charging port 132, the communication contacts 220, 222 can be electrically coupled to the corresponding communication contacts 278, 279 on the charging port 132 to allow charging to commence.

In some non-limiting examples, any of the power contacts 214, 215 and the communication contacts 220, 222 can be configured as spring-biased contacts. In this way, the contacts can be compressed into the charger plate assembly 150 when in contact with the charging port 132, as may allow a predetermined pressure to be applied between the contacts of the charger plate assembly 150 and the charging port 132. Further, the spring biased nature of the contacts can also increase a positional tolerance between the charger plate assembly 150 and the charging port 132.

To charge the battery 124 of the material handling vehicle 102, the charging system 104 can include a charge controller 311. The vehicle controller 122 can operate a communication link (e.g., a wireless communication link) between the battery 124 and a charge controller 311 of the charging system 104 to control charging of the battery 124. That is, the vehicle controller 122 can communicate with the charge controller 311 to initiate or control a flow of electrical current from the charging system 104 to the battery 124 of the material handling vehicle 102.

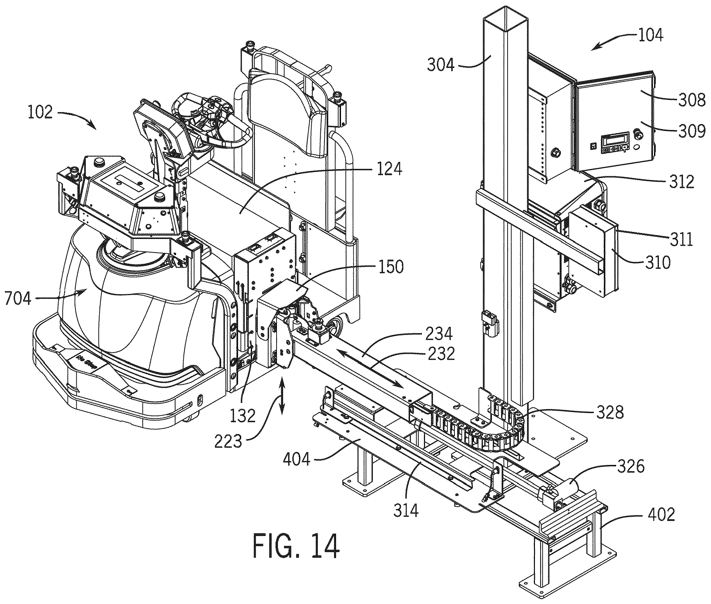

Similar to the non-limiting examples above, the charger plate assembly 150 can be supported on an (automatically) adjustable mounting assembly arm 234 that can be articulated in various ways to move the charger plate assembly 150 into contact with the charging port 132 for charging. More specifically, the mounting assembly arm 234 can be articulated to move between a stored configuration (see FIG. 13), in which the charger plate assembly 150 is retracted on the mounting assembly arm 234 when not charging, and an extended configuration (see FIG. 14), in which the charger plate assembly 150 is extended on the mounting assembly arm 234 for charging.

In accordance with the discussion above, the mounting assembly arm 234 can be configured to move and support the charger plate assembly 150 along one or more directions to be in contact with the charging port 132. Accordingly, the charging system 104 can include a position compensation system configured to move the charger plate assembly 150 into alignment and into contact with the charging port 132. As illustrated, the position compensation system is configured to move the charger plate assembly 150 along two directions, in particular, a first direction 232 extending between the mounting assembly arm 234 and the material handling vehicle 102 to adjust a gap between the charging port 132 and the charger plate assembly 150, and a second direction 233 that can be a vertical direction oriented perpendicular or normal to a ground surface, or that corresponds with a height of the material handling vehicle 102.

To move the charger plate assembly 150 along the first direction 232, the mounting assembly arm 234 can be movably supported on a base 402, which can be fixedly secured to the ground or another support surface. The base 402 can support a rail plate 404, upon which one or more guide rails 314 can be supported. The mounting assembly arm 234 can be movably supported on the guide rails 314. Correspondingly, as illustrated in FIGS. 13-15, the mounting assembly arm 234 can be configured to move the charger plate assembly 150 linearly on the guide rails 314, relative to the base 402, along the first direction 232. To move the mounting assembly arm 234 relative to the base 402, a first actuator 326 can be operably coupled between the mounting assembly arm 234 and the base 402. That is, the first actuator 326 can be operated (e.g., extended and retracted) to move the mounting assembly arm 234, and thus charger plate assembly 150, along the first direction 232 between the stored position and the extended position.

Additionally, and as mentioned above, the charger plate assembly 150 can also be moved along the second direction 233 to adjust a vertical position of the charger plate assembly 150 (i.e., a height relative to the ground), as may allow the charging system 104 to account for tire wear, differently sized material handling vehicles, etc. For example, as illustrated in FIGS. 13-15, the charger plate assembly 150 can be movably supported on the mounting assembly arm 234 so that the charger plate assembly 150 can move along the second direction 233 relative to the mounting assembly arm 234 and the base 402. To move the charger plate assembly 150 along the second direction, the charger plate assembly 150 can further include a second actuator 334 (see FIG. 10). Operation of the second actuator 334 (e.g., extension and retraction) can move the charger plate assembly 150 along the second direction 233.

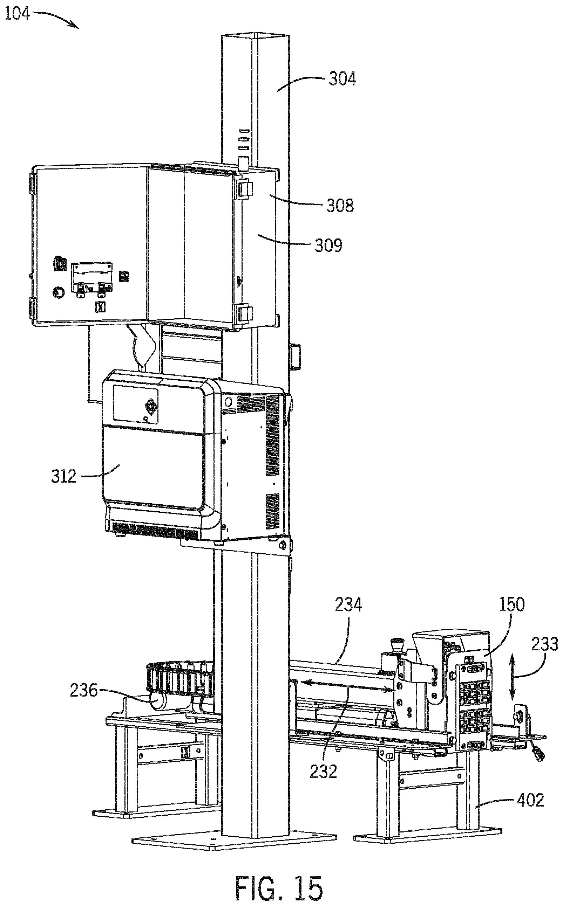

In some non-limiting examples, the charging system 104 can automatically move the charger plate assembly 150 into contact with the charging port 132 upon sensing the presence of a material handling vehicle (e.g., the material handling vehicle 102). Correspondingly, referring again to FIGS. 14 and 15, the position compensation system of the charging system 104 can include a position controller 309 to control any actuators (e.g., the first and second actuators 326, 334) to move the charger plate assembly 150 into alignment with the charging port 132, as well as a sensor system (e.g., a sensing array) in communication with the position controller 309, which can be configured to detect when the material handling vehicle 102 is in a charging area and/or the position of the charger plate assembly 150.

While various types of sensors can be used, the illustrated non-limiting example includes a first position sensor 346 (e.g., a first sensor) and a second position sensor 350 (e.g., a second sensor) that are in communication with the position controller 309. Each of the first position sensor 346 and the second position sensor 350 can be configured to detect a presence of the material handling vehicle 102 and to measure a distance between the charger plate assembly 150 and the charging port 132 along the first direction 232. The first position sensor 346 and the second position sensor 350 can be secured to the mounting assembly arm 234. In some non-limiting examples, the sensor system can further include one or more proximity sensors to sense whether the mounting assembly arm 234 is in the retracted position or moved away from the retracted position to be in an extended position (e.g., a fully-retracted or partially-retracted position). As illustrated in FIGS. 14 and 15, the sensor system includes a first proximity sensor 360 (e.g., a third sensor) and a second proximity sensor 362 (e.g., a fourth sensor) that are configured to detect a state of the mounting assembly arm 234 based on a blocked or unblocked state of the respective sensor. More, specifically, the first proximity sensor 360 (e.g., a first overtravel sensor) and the second proximity sensor 362 (e.g., a second overtravel sensor) are positioned on the base 402 so that, when the mounting assembly arm 234 is in the retracted position (see FIG. 13) the first proximity sensor 360 is blocked and the second proximity sensor 362 is unblocked. Conversely, when the mounting assembly arm 234 is extended (see FIG. 14) the first proximity sensor 360 is unblocked and the second proximity sensor 362 is blocked. Accordingly, the position controller 309 can determine whether the mounting assembly arm 234 is retracted or extended based on a blocked and unblocked state of one or both of the first proximity sensor 360 and the second proximity sensor 362.

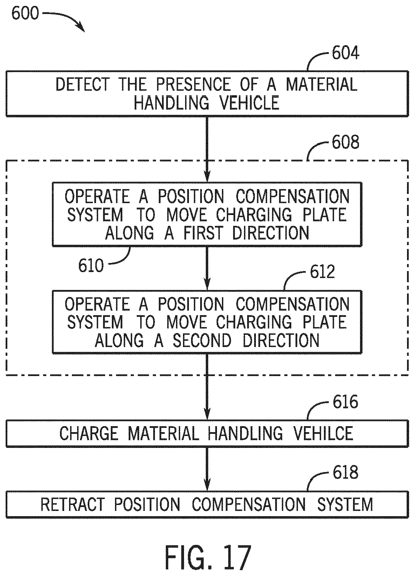

Turning now to FIG. 17, a method 600 for operating the charging system 104 to move the charger plate assembly 150 into substantial alignment with the charging port 132 is illustrated. While the method 600 is described in relation to the charging system 104, it will be appreciated by those skilled in the art that such a method can be modified to apply to other non-limiting example charging systems according to the present disclosure. The method 600 may start at step 604, in which the sensor system can detect the presence of the material handling vehicle 102 within a charging area. More specifically, at least one of the first position sensor 346 and the second position sensor 350 can detect the presence of the material handling vehicle 102 and can send a corresponding signal to the position controller 309. For example, the signal may indicate a distance between the charger plate assembly 150 and the charging port 132. In other non-limiting examples, it is also possible that the presence of a material handling vehicle is communicated to the position controller 309 in other ways, for example, by a communication sent from the material handling vehicle 102 or an automation management system.

At step 608, the charging system 104 (e.g., a position composition system thereof) can be operated to align the charger plate assembly 150 to the charging port 132. More specifically, upon receiving the signal that the material handling vehicle 102 is present, the position controller 309 can position the charger plate assembly 150 in substantial alignment with the charging port 132. Aligning the charger plate assembly 150 with the charging port 132 can include selectively operating any or all actuators and/or actuating structures of the charging system 104. For example, step 610 can include operating the first actuator 326 to move the charger plate assembly 150 along the first direction 232. More specifically, the position controller 309 can operate the first actuator 326 to extend the mounting assembly arm 234 to decrease a distance between the charger plate assembly 150 and the charging port 132 along the first direction 232 (e.g., to move the mounting assembly arm 234 away from the stored position). The position controller 309 can continue moving the mounting assembly arm 234 and the charger plate assembly 150 toward the charging port 132 until the charger plate assembly 150 contacts the charging port 132.

The position controller 309 can determine when the charger plate assembly 150 is in contact with the charging port 132 based on a signal (e.g., a distance measurement) from at least one of the first position sensor 346 and the second position sensor 350. For example, position controller 309 may determine that the charger plate assembly 150 is in contact with the charging port 132 when one or both of the first position sensor 346 and the second position sensor 350 indicate that the charger plate assembly 150 is at a predetermined distance from the charging port 132. In some cases, particularly where electrical contacts are configured as spring-biased contacts, the predetermined distance can be set so that the electrical power contacts 214, 215 can be compressed to maintain desired pressure between the electrical power contacts 214, 215 and the power contacts 276, 277.

However, in some cases, although the electrical power contacts 214, 215 may be in contact with the power contacts 276, 277, the charger plate assembly 150 and the charging port 132 may still be misaligned along another direction. For example, the charger plate assembly 150 and the charging port 132 may be misaligned along the second direction 233 so that the respective communication contacts 220, 222 of the charger plate assembly 150 and the communication contacts 278, 279 of the charging port 132, are not connected to complete the pilot or communication circuit, thereby preventing charging from occurring. Accordingly, operations at step 612 can further include operating the second actuator 334 to move the charger plate assembly 150 along the second direction 233 to be in vertical alignment with the charging port 132. For example, the charger plate assembly 150 can be moved up or down (e.g., between a highest position and a lowest position) until the respective pilot contacts engage to complete the pilot circuit. In some non-limiting examples, particularly where the electrical power contacts 214, 215 are already in contact with the electrical power contacts 276, 277, movement of the charger plate assembly 150 along the second direction 233, or another direction perpendicular to the first direction 232, can cause additional frictional scrubbing (e.g., in additional to the scrubbing caused by rotation of the charger plate assembly 150 during engagement) between the respective contacts, which may aid in cleaning the contacts and improving the electrical connection therebetween.

Completion of the pilot circuit can act as a signal to the position controller 309 to cease operating the second actuator 334 and to the vehicle controller 122 or the charge controller 311 to allow charging of the material handling vehicle 102 to occur at step 616. Charging of the material handling vehicle 102 can occur at step 616 until the battery 124 is at a full charge or until the vehicle controller 122 receives a signal from, for example, an automation management system or another source, such as an operator signal, that the material handling vehicle 102 is needed elsewhere. Accordingly, the vehicle controller 122 can communicate to the charge controller 311 to cease charging. Correspondingly, after charging has ceased, the position controller 309 can operate the charging system 104 (e.g., a position compensation system thereof) to move the charger plate assembly 150 back to the stored position at step 618, after which the charging system 104 can communicate to the material handling vehicle 102 that it may leave the charging area.

For certain types of vehicles there are training requirements imposed by various government agencies, laws, rules, and regulations. For example, the United States Department of Labor Occupational Safety and Health Administration (OSHA) imposes a duty on employers to train and supervise operators of various types of material handling vehicles. Recertification every three years is also required. In certain instances, refresher training in relevant topics shall be provided to the operator when required. In all instances, the operator remains in control of the material handling vehicle during performance of any actions. Further, a warehouse manager remains in control of the fleet of material handling vehicles within the warehouse environment. The training of operators and supervision to be provided by warehouse managers requires among other things proper operational practices including among other things that an operator remain in control of the material handling vehicle, pay attention to the operating environment, and always look in the direction of travel.

According to a one aspect A, combinable with any other aspect of the disclosure, there is proposed a charging system for a material handling vehicle, the material handling vehicle including a battery and a charging port having a first vehicle electrical contact electrically coupled to the battery, the charging system comprising:
a mounting assembly arm; and
a charger plate assembly pivotally coupled to rotate relative to the mounting assembly arm to move between a first orientation and a second orientation, the charger plate assembly including a second charger plate electrical contact electrically coupled to a power source, the second charger plate electrical contact being configured to couple to the first vehicle plate electrical contact of the material handling vehicle for charging.

According to a one aspect B there is proposed a charging system of aspect A, wherein, in the first orientation, a head plane defined by the charger plate assembly is angled relative to a mounting plane defined by the mounting assembly arm,
wherein, in the second orientation, the head plane is parallel to the mounting plane, and
wherein a biasing element is positioned between the charger plate assembly and the mounting assembly arm to bias the charger plate assembly to the first orientation.

According to one aspect C of there is proposed a charging system of aspect A or B, wherein, as the charging port is brought into contact with the charger plate assembly, the second charger plate electrical contact of the charger plate assembly slides across the first vehicle electrical contact of the charging port to cause sliding frictional contact therebetween to passively clean each of the second charger plate electrical contact and the first vehicle electrical contact.

According to one aspect D there is proposed a charging system of aspect A or B or C, wherein at least one of the first vehicle electrical contact and the second charger plate electrical contact is configured as a plurality of electrical contacts.

According to one aspect AA combinable with any other aspect of the disclosure, there is proposed a charging system for a material handling vehicle, the charging system comprising:
a base;
a mounting assembly arm moveably coupled to the base;
a first actuator coupled between the base and the mounting assembly arm, the first actuator being configured to selectively translate the mounting assembly arm along a first direction;
a charger plate assembly moveably coupled to a distal end of the mounting assembly arm; and
a second actuator coupled between the charger plate assembly and the mounting assembly arm, the second actuator being configured to selectively translate the charger plate assembly along a second direction that is different from the first direction.

According to one aspect BB there is proposed a charging system of aspect AA, further comprising a guide rail supported on the base, wherein the mounting assembly arm is coupled to the guide rail by a plurality of wheels arranged to couple with the guide rail.

According to one aspect CC there is proposed a charging system of aspect AA or BB, wherein the charger plate assembly is pivotally coupled to distal end of the mounting assembly arm to move from a first orientation to a second orientation, and wherein a distal end of the second actuator distal includes a rotational bearing configured to engage with the charger plate assembly.

According to one aspect DD there is proposed a charging system of aspect CC, wherein the charger plate assembly includes a housing and a lifting plate that is coupled to the housing, and wherein the rotational bearing is configured to engage with the lifting plate.

According to one aspect EE there is proposed a charging system of any aspect AA, BB, CC or DD, wherein the first direction corresponds with a distance between a charging port of the material handling vehicle and the charger plate assembly, and the second direction is perpendicular to the first direction.

According to one aspect FF there is proposed a charging system of any aspect AA, BB, CC, DD or EE, further comprising a position controller configured to selectively operate the first actuator and the second actuator.

According to one aspect GG there is proposed a charging system of aspect FF, further comprising a first sensor coupled to the charger plate assembly and in communication with the position controller, the first sensor being configured to sense a distance between the charger plate assembly and a charging port of the material handling vehicle along the first direction.

According to one aspect HH there is proposed a charging system of any aspect FF or GG, further comprising a second sensor coupled to the charger plate assembly and in communication with the position controller, the second sensor being configured to detect a target arranged on a material handling vehicle to align the charging plate assembly with a charging port of the material handling vehicle along the second direction.

According to one aspect II there is proposed a charging system of any aspect FF or GG or HH, further comprising a third sensor and a fourth sensor that are each in communication with the position controller, the third sensor and fourth sensor being configured to sense a position of the mounting assembly arm along the first direction.

According to one aspect JJ there is proposed a charging system of any aspect FF or GG or HH or II, wherein the position controller is configured to:
operate the first actuator to move the charger plate assembly a first distance along the first direction to be a predetermined distance away from a charging port of the material handling vehicle; operate the second actuator to move the charger plate assembly a second distance along the second direction so that the charger plate assembly is aligned with the charging port along the second direction; and operate the first actuator to move the charger plate assembly a third distance along the first direction so that the charger plate assembly electrically couples to the charging port of the material handling vehicle for charging.

According to one aspect KK there is proposed a charging system of any aspect AA or BB or CC or DD or EE or FF or GG or HH or II or JJ, further comprising a charge controller in communication with the material handling vehicle, the charge controller being configured to control a flow of current between the charger plate assembly and a charging port of the material handling vehicle.

According to one aspect AAA combinable with any other aspect of the disclosure, there is proposed a charging system for a material handling vehicle having a charging port with a first vehicle electrical contact, the charging system comprising:
a base;
a mounting assembly arm moveably coupled to the base;
a charger plate assembly coupled to a distal end of the mounting assembly arm, the charger plate assembly including a second charger plate electrical contact configured to engage with the first vehicle electrical contact of the charging port;
a first actuator coupled between the base and the mounting assembly arm, the first actuator being configured to selectively translate the mounting assembly arm and the charger plate assembly relative to the base along a first direction;
a second actuator coupled between the charger plate assembly and the mounting assembly arm, the second actuator being configured to selectively translate the charger plate assembly relative to the mounting assembly arm along a second direction that is different from the first direction; and a position controller configured to selectively operate the first actuator and the second actuator to electrically couple the second charger plate electrical contact with the first vehicle electrical contact.

According to one aspect BBB there is proposed a charging system of aspect AAA, wherein the first direction corresponds with a distance between the charging system and the material handling vehicle; and where the second direction corresponds with a height of the material handling vehicle.

According to one aspect CCC there is proposed a charging system of aspect AAA or BBB, wherein the position controller is configured to:
operate the first actuator to move the second charger plate electrical contact a first distance along the first direction to be at a predetermined distance away from the first vehicle electrical contact, in which the second charger plate electrical contact is electrically decoupled from the first vehicle electrical contact; operate the second actuator to move the second charger plate electrical contact a second distance along the second direction so that the second charger plate electrical contact is aligned with the first vehicle electrical contact along the second direction; and operate the first actuator to move the second charger plate electrical contact a third distance along the first direction so that the second charger plate electrical contact is electrically coupled to the first vehicle electrical contact.

According to one aspect DDD there is proposed a charging system of any aspect AAA or BBB or CCC, further comprising:
a first sensor in communication with the position controller, the first sensor being configured to sense a distance between the first vehicle electrical contact and the second charger plate electrical contact along the first direction; and
a second sensor in communication with the position controller, the second sensor being configured to sense a distance between the first vehicle electrical contact and the second charger plate electrical contact along the second direction.

According to one aspect AAAA combinable with any other aspect of the disclosure, there is proposed a method of charging a material handling vehicle having a battery and a charging port electrically connected to the battery, the method comprising:
moving a charger plate assembly a first distance along a first direction to be at a predetermined distance the charging port along the first direction;
moving the charger plate assembly along a second direction to be aligned with the charging port, the second direction being different from the first direction; and
moving the charger plate assembly a second distance along the first direction to electrically couple the charger plate assembly to the charging port.

According to one aspect BBBB there is proposed a method of aspect AAAA, further comprising at least one of:
determining that the charger plate assembly is at the predetermined distance with a first position sensor; and
determining that the charger plate assembly is aligned with the charging port with a second sensor.

According to one aspect CCCC there is proposed a method of aspect AAAA or BBBB, wherein at least one of:
moving the charger plate assembly along the second direction occurs when the charger plate assembly is at the predetermined distance; and
moving the charger plate assembly the second distance along the first direction occurs when the charger plate assembly is aligned with the charging port.

According to one aspect DDDD there is proposed a method of any of the aspects AAAA or BBBB or CCCC, further comprising:
with the charger plate assembly electrically coupled to the charging port, charging the battery; and moving the charger plate assembly away from the material handling vehicle to electrically decouple the charger plate assembly from the charging port, wherein the charger plate assembly is moved to a stored position where the charger plate assembly is fully retracted.

According to one aspect EEEE there is proposed a method of any of the aspects AAAA or BBBB or CCCC or DDDD, further comprising:
pivoting the charger plate assembly relative to a mounting assembly arm; and sliding an electrical contact of the charger plate assembly over an electrical contact of the charging port.

As used herein, unless otherwise defined or limited, ordinal numbers are used herein for convenience of reference based generally on the order in which particular components are presented for the relevant part of the disclosure. In this regard, for example, designations such as "first," "second," etc., generally indicate only the order in which the relevant component is introduced for discussion and generally do not indicate or require a particular spatial arrangement, functional or structural primacy or order.

Within this specification embodiments have been described in a way which enables a clear and concise specification to be written, but it is intended and will be appreciated that embodiments may be variously combined or separated without parting from the invention. For example, it will be appreciated that all preferred features described herein are applicable to all aspects of the invention described herein.

Thus, while the invention has been described in connection with particular embodiments and examples, the invention is not necessarily so limited, and numerous other embodiments, examples, uses, modifications and departures from the embodiments, examples and uses are intended to be encompassed by the claims attached hereto. The entire disclosure of each patent and publication cited herein is incorporated by reference, as if each such patent or publication were individually incorporated by reference herein.

Various features and advantages of the invention are set forth in the following claims.

## Claims

1. A charging system for a material handling vehicle, the charging system comprising:
a mounting assembly arm; and
a charger plate assembly moveably coupled to a distal end of the mounting assembly arm, the charger plate assembly including a first charger plate electrical contact that is configured to electrically couple with a second vehicle electrical contact of a charging port of the material handling vehicle,
wherein, when the first charger plate electrical contact electrically couples with the second vehicle electrical contact, the charger plate assembly is configured to move relative to the mounting assembly arm to cause a scrubbing action between the first charger plate electrical contact and the second vehicle electrical contact, preferably at least one of the first charger plate electrical contact and the second vehicle electrical contact is configured as a spring-biased contact..

2. The charging system of claim 1, wherein the charger plate assembly is pivotally coupled to distal end of the mounting assembly arm.

3. The charging system of claim 2, wherein contact between the first charger plate electrical contact and the second vehicle electrical contact causes the charger plate assembly to pivot from a first rotational position to a second rotational position to cause the scrubbing action between the first charger plate electrical contact and the second vehicle electrical contact.

4. The charging system of claim 3, further comprising a biasing element configured to bias the charger plate assembly to the first rotational position.

5. The charging system of any of the claims above, wherein the mounting assembly arm is configured to move along a first direction to change a distance between the charger plate assembly and the charging port of the material handling vehicle.

6. The charging system of claim 5, further comprising:
a base configured to movably support the mounting assembly arm; and
a first actuator coupled between the base and the mounting assembly arm, the first actuator being configured to extend and retract to change the distance between the charger plate assembly and the charging port of the material handling vehicle.

7. The charging system of claim 6, further comprising a pair of guide rails supported on the base, wherein the mounting assembly arm is coupled to the guide rails by a plurality of wheels arranged within the guide rails.

8. The charging system of any of the claims above, further comprising a second actuator coupled between the charger plate assembly and the mounting assembly arm, the second actuator being configured to selectively adjust a position of the charger plate assembly along a second direction that is different from the first direction.

9. The charging system of any of the claims above, further comprising a first sensor coupled to the charger plate assembly, the first sensor being configured to sense a distance between the charger plate assembly and a charging port of a material handling vehicle.

10. The charging system of claim 9, further comprising a second sensor coupled to the charger plate assembly, the second sensor being configured to detect a target arranged on a material handling vehicle.

11. The charging system of any of the claims above, wherein the first charger plate electrical contact and the second vehicle electrical contact are configured for at least one of transferring electrical power for charging a battery of the material handling vehicle and transmitting electrical communications between the material handling vehicle and the charging system.

12. A method of charging a material handling vehicle, the material handling vehicle including a battery and a charging port having a first vehicle electrical contact electrically coupled to the battery, the method comprising:
moving a mounting assembly arm toward the material handling vehicle to engage a charger plate assembly with the charging port, the charger plate assembly having a second charger plate electrical contact configured to electrically couple to the first charger plate electrical contact;
moving the charger plate assembly relative to the mounting assembly arm; and
sliding the second charger plate electrical contact across the first vehicle electrical contact to cause sliding frictional contact therebetween.

13. The method of claim 12, wherein engaging the charging port with the charger plate assembly causes pivoting movement of the charger plate assembly about the mounting assembly arm, and
wherein the pivoting movement of the charger plate assembly about the mounting assembly arm causes the sliding between the first vehicle electrical contact and the second charger plate electrical contact.

14. The method of claim 12 or 13, wherein the sliding frictional contact between the first vehicle electrical contact and the second charger plate electrical contact is configured to remove contaminants from each of the first vehicle electrical contact and the second charger plate electrical contact.

15. The method of claim any of claims 12, 13 or 14, further comprising:
determining that a charge of the battery is below a threshold; and
navigating the material handling vehicle toward the charger plate assembly, based on a determination that the charge is below the threshold.
